# EUROPÄISCHE PATENTSCHRIFT

(11) **EP 1 994 362 B1**
(45) Veröffentlichungstag und Bekanntmachung des Hinweises auf die Patenterteilung: **21.01.2015**
(21) Anmeldenummer: 07703110.2
(22) Anmeldetag: 30.01.2007
(51) Int. Cl.: G01B 11/30, G01B 5/00, G01N 21/954

(54) **MESSVERFAHREN, MESSSYSTEM UND BEARBEITUNGSMASCHINE MIT MESSSYSTEM**
MEASURING METHOD, MEASURING SYSTEM, AND PROCESSING MACHINE COMPRISING A MEASURING SYSTEM
PROCÉDÉ DE MESURE, SYSTÈME DE MESURE ET MACHINE D'USINAGE DOTÉ DE CE SYSTÈME DE MESURE

(30) Priorität: 09.03.2006 DE 102006050838; 09.03.2006 DE 102006011904
(43) Veröffentlichungstag der Anmeldung: 26.11.2008
(73) Patentinhaber: NAGEL Maschinen- und Werkzeugfabrik GmbH, D-72622 Nürtingen (DE)
(72) Erfinder: WEIGMANN, Uwe-Peter, 72622 Nürtingen (DE)
(74) Vertreter: Patentanwälte Ruff, Wilhelm, Beier, Dauster & Partner
(86) Internationale Anmeldenummer: PCT/EP2007/000754
(87) Internationale Veröffentlichungsnummer: WO 2007/101513

(56) Entgegenhaltungen:
- EP-A1- 0 697 591
- EP-A2- 0 377 187
- DE-A1- 3 241 710
- GB-A- 2 255 994
- GB-A- 2 329 244
- US-A- 5 895 927

## Beschreibung

Die Erfindung betrifft ein Messverfahren zum Messen einer Werkstückoberfläche an einem Werkstück, ein zur Durchführung des Messverfahrens geeignetes Messsystem sowie eine Bearbeitungsmaschine mit einem Messsystem. Bevorzugtes Anwendungsgebiet ist die Messung von durch Honen bearbeiteten Zylinderlaufflächen eines Motorblockes oder die Messung von durch Superfinishen oder Außenhonen bearbeiteten, zylindrisch gekrümmten Außenflächen von Werkstücken zur Bestimmung der Oberflächenstruktur der Werkstückoberfläche.

Das Honen ist ein Zerspanungsverfahren mit geometrisch unbestimmten Schneiden, bei dem vielschneidige Honwerkzeuge eine aus zwei Komponenten bestehende Schnittbewegung ausführen, die zu einer charakteristischen Oberflächenstruktur der bearbeiteten Innenfläche mit überkreuzten Bearbeitungsspuren führt. Durch Honen sind endbearbeitete Oberflächen herstellbar, die extrem hohen Anforderungen bezüglich Maß- und Formtoleranzen sowie hinsichtlich der Oberflächenstruktur genügen. Dementsprechend werden beispielsweise beim Motorenbau Zylinderlaufflächen, d.h. Innenflächen von Zylinderbohrungen in einem Motorblock oder in einer in einen Motorblock einzubauenden Zylinderhülse, und Lagerflächen für Wellen einer Honbearbeitung unterzogen. Bei der Bearbeitung von Zylinderlaufflächen werden typischerweise mehrere unterschiedliche, aufeinander folgende Honoperationen durchgeführt, beispielsweise ein Vorhonen zur Erzeugung der gewünschten Makroform der Bohrung und ein Fertighonen, mit dem die am fertigen Werkstück benötigte Oberflächenstruktur erzeugt wird. Durch anschließende Messschritte kann der Bearbeitungserfolg überprüft werden.

Für die Feinbearbeitung zylindrisch gekrümmter Werkstückaußenflächen wird häufig das sogenannte Superfinishen eingesetzt, bei dem bandförmiges Schleifmittel mit Hilfe geeignet geformter Andrückeinrichtungen an die zu bearbeitende Außenkontur gepresst wird. Durch kurzhubig oszillierende Axialbewegung des Schleifmittels in axialer Richtung in Verbindung mit einer Rotation des bearbeiteten Werkstückabschnittes um seine Achse wird die für den Materialabtrag erforderliche Bearbeitungsbewegung erzeugt. Gekrümmte Werkstückaußenflächen, beispielsweise an Kolbenstangen oder dergleichen, können auch durch Außenhonen bearbeitet werden. Auch bei gekrümmten Werkstückaußenflächen ist es häufig gewünscht, die erzielte Oberflächenqualität messtechnisch zu bestimmen.

Das europäische Patent EP 0 377 187 B1 zeigt eine Messvorrichtung zum Messen der Form von Zylinderbohrungen bei Motorblöcken in einer Messstation, die einen vertikal bewegbaren und auf einen in der Messstation aufgenommenen Motorblock absenkbaren Messkopf hat, der mehrere Messsonden trägt, die jeweils zum Eintauchen in einzelne Zylinderbohrungen vorgesehen sind. Jede Messsonde hat mehrere in Sondenlängsrichtung mit Abstand zueinander angeordnete Messsensoren mit radial über den Sondenmantel vorstehenden Taststiften zum taktilen Abtasten der Oberfläche. Nach Absenken des Messkopfes und Eintauchen der Messsonden in die Zylinderbohrungen werden zunächst die Taststifte mit den zu messenden Innenflächen in Kontakt gebracht. Danach wird der Messkopf bezüglich des Werkstückes in einer Messposition fixiert und diese Festlegung wird mittels einer Vorspannkraft aufrecht erhalten. Zur Fixierung dienen nach unten vom Messkopf abragende Indexstifte, die von oben in an der Deckfläche des Motorblocks vorgesehene Indexbohrungen eingeführt werden. Danach wird bei elastisch gebettetem Werkstück und einem von seinen Zustellorganen entkoppelten Messkopf die Form der Zylinderbohrungen durch Abtasten mittels der Taststifte auf benachbarten Parallelkreisen gemessen.

Aus dem Prospekt "HOMMEL INCOLINE - Dynamische Messsysteme zur Oberflächen- und Formbestimmung in der Motorenentwicklung und-fertigung" der Firma HOMMEL Incotec GmbH ist ein unter der Bezeichnung "V-Incometer" angebotenes flexibles Messsystem für Form und Rundheit in Zylinderbohrungen bekannt. Die mobile Messvorrichtung hat eine in eine Zylinderbohrung einführbare, stangenförmige Messsonde, an der eine umlaufend antreibbare Messspitze geführt ist. Die Messsonde wird mit Hilfe von manuell mit Hilfe von Stellschrauben aufspreizbaren Klemmbacken im Eingangsbereich der Zylinderbohrung fixiert, so dass die Führungsstange in den zu messenden Bereich der Zylinderbohrung ragt. Eine Anpassung der Messsonde an unterschiedliche Durchmesser ist durch Austausch der Messspitzen und Klemmbacken möglich. Eventuelle Exzentrizitäten oder Schrägstellungen der Zylinderachse zur Messsonde werden per Software eliminiert.

Das deutsche Gebrauchsmuster DE 200 23 557 U1 zeigt eine manuell an einem Werkstück festlegbare mobile Vorrichtung zum Messen von Bohrungen. Sie hat einen während der Messung der Bohrung mit dem Werkstück fest verbundenen Stützteil und eine relativ zum Stützteil um eine Drehachse drehbare Messsonde, die in die Bohrung eingeführt wird und die zumindest einen Messsensor zur Messung der Bohrung trägt. Die vom Stützteil zum Messsensor führende elektrische Leitung enthält eine Schleifkontaktanordnung, die eine freie Drehbarkeit der Messsonde gegenüber dem Stützteil unter Aufrechterhaltung der Leitungsverbindung zum Messsensor erlaubt. Für die Messung wird zunächst eine Anschlussplatte im Bereich der Öffnungsränder der Zylinderbohrung auf die Deckfläche des Motorblockes aufgeschraubt. An der Anschlussplatte befinden sich schwenkbare Klemmhebel, die mit einem Flansch am Stützteil der Messvorrichtung zusammenwirken, wenn die Messsonde für die Messung in die Zylinderbohrung eingeführt wurde. Nach Einführung der Messsonde wird die Messvorrichtung durch manuelles Umlegen der Klemmhebel am Werkstück fixiert.

Die DE 32 41 710 A1 beschreibt ein Verfahren und eine Vorrichtung zur Prüfung von Teilen oder Werkstücken. Dabei ist ein elektro-optischer Tastkopf lösbar an einer herkömmlichen Werkzeugmaschine z.B. an einem Ort gehalten, an dem normalerweise ein Werkzeug gehalten sein würde, um die Eigenschaften des Werkstücks abzutasten. Bei einer Ausführungsform kann Luft direkt in den Tastkopf über Leitungen geleitet werden, die normalerweise zur Zuführung von Kühlmittel zu einem Werkzeug verwendet werden, um dasjenige Gebiet des Werkstücks zu reinigen, das von dem Tastkopf beobachtet werden soll. Auch ein optisches Fenster kann mit Hilfe von Luft freigeblasen werden. Alternativ ist es möglich, zum Reinigen des Fensters das Kühlmittel selbst zu verwenden.

Die europäische Patentschrift EP 0 697 591 B1 beschreibt eine Vorrichtung zur Kontrolle der Oberfläche einer Walzwerkwalze. Die Vorrichtung umfasst längs dieses Zylinders eine gelenkig gelagert Halterung, die einen Abstreifer trägt, der auf der Oberfläche des Zylinders aufliegt. Es ist mindestens ein Apparat zur Sichtkontrolle der Oberfläche des Zylinders an der gelenkig gelagerten Halterung so befestigt, dass sein Sehkopf unter dem Abstreifer in unmittelbarer Nähe der Oberfläche dieses Zylinders angeordnet ist. Bei einer Ausführungsform wird eine innerhalb eines Gehäuses untergebrachte Kamera verwendet, deren Sehachse radial zur Oberfläche des zu kontrollierenden Zylinders gerichtet ist. Das Gehäuse ist mit einem Wasserkühlkreis versehen, bei dem Wasser durch eine dem Zylinder zugewandten Öffnung abfließen kann. Bei ausreichend geringem Abstand zur Zylinderoberfläche kann ein Wasserkissen an dem Ausgang des Gehäuses aufrechterhalten werden.

Es ist eine Aufgabe der Erfindung, ein Messverfahren und ein zur Durchführung des Messverfahrens geeignetes Messsystem bereitzustellen, die eine hochgenaue Messung der Innenflächen von Bohrungen oder feinbearbeiteter Werkstückaußenflächen ermöglichen. Insbesondere soll eine produktionsnahe, schnelle und genaue Messung feinbearbeiteter gekrümmter Werkstückoberflächen ermöglicht werden, z.B. bei Zylinderlaufflächen eines Motorblockes zur Bestimmung der Oberflächenstruktur der Innenfläche.

Zur Lösung dieser und anderer Aufgaben stellt die Erfindung ein Messverfahren gemäß Anspruch 1 und ein Messsystem gemäß Anspruch 8 bereit. Weiterhin wird eine Bearbeitungsmaschine mit den Merkmalen von Anspruch 42 bereitgestellt.

Gemäß einem ersten Aspekt der Erfindung wird mindestens ein optischer Messsensor verwendet, der nach Art von Mikroskopobjektiven nahe an die zu messende Werkstückoberfläche herangeführt werden kann. Dabei ist vorgesehen, den Zwischenraum zwischen der zu messenden Werkstückoberfläche und der Messoptik mit einer für die Messstrahlung transparenten Flüssigkeit, beispielsweise einer transparenten Kühlflüssigkeit, auszufüllen. Hierdurch sind Aufnahmen mit verbesserter Auflösung und/oder verbesserter Schärfentiefe im Vergleich zu "trockenen" Messungen ohne eine als Immersionsmedium wirkende Flüssigkeit möglich. Besonders bei Messungen in unmittelbarer Fertigungsnähe, beispielsweise zwischen zwei Honschritten oder unmittelbar nach Abschluss eines vorangehenden Honverfahrens, kann mit Hilfe der transparenten Flüssigkeit die Messstelle auch für die Messung gereinigt und damit optimal vorbereitet werden. Als Immersionsflüssigkeit für die Messstrahlung des optischen Messsystems wird erfindungsgemäß die zur Bearbeitung verwendete Bearbeitungsflüssigkeit, z.B. Kühlschmierstoff, verwendet. Zur Erhöhung der Genauigkeit kann dieser vor Zuführung in den Messbereich durch ein geeignetes, beispielsweise mit einem Filter ausgestattetes Reinigungssystem gereinigt werden, um ausreichende Transmission zu sichern. Auch wenn der Kühlschmierstoff als Zwischenstoff keine Verbesserung der Abbildung im Vergleich zu Luft bietet, kann bei dessen Verwendung als Zwischenstoff eine aufwändige Trocknung der zu messenden Oberfläche eingespart werden.

Es ist auch möglich, eine Reinigung des Messbereiches durch Freiblasen des Messbereiches mittels Luft oder eines anderen geeigneten Reinigungsgases durchzuführen. Hierdurch kann der zu messende Bereich beispielsweise von Honspänen und Resten von Honöl zumindest so weit bereinigt werden, dass die Messung nicht durch derartige Rückstände an der zu messenden Werkstückoberfläche beeinflusst wird. Im Bereich der Messsonde können sich dazu eine oder mehrere Blasdüsen befinden, die an ein mit Druckluft versorgbares Fluidkanalsystem angeschlossen sind. Die pneumatische Reinigung kann auch im Zusammenhang mit der Flutung des Messbereiches durchgeführt werden, indem beispielsweise zuerst der Messbereich pneumatisch gereinigt und danach eine Immersionsflüssigkeit zwischen einen optischen Sensor und die gereinigte Innenfläche geleitet wird.

Es ist auch möglich, dass der Messbereich zunächst mit einer Flüssigkeit gespült und anschließend durch Einblasen eines Reinigungsgases, beispielsweise Luft, freigeblasen wird. Die pneumatische Reinigung kann bis zur Trocknung des flüssigkeitsgespülten Messbereiches fortgeführt werden.

Ein großer Vorteil optischer Messsensoren ist die geringe Verschleißanfälligkeit, da keine mechanische Berührung zwischen dem Messsensor und der zu messenden Oberfläche stattfinden muss. Ein möglicher Nachteil bei einem Einsatz in unmittelbarer Fertigungsnähe ist die Benetzung der zu messenden Flächen mit Kühlschmierstoff. Es kann sein, dass selbst beim Abblasen der Oberflächen Reste von Kühlschmierstoff in den Bearbeitungsspuren verbleiben und damit ggf. die optische Messung verfälschen. Daher ist eventuell eine z.B. rechnerische Nachbearbeitung der optisch erfassten Messdaten erforderlich, gegebenenfalls kann es auch zu Messfehlern kommen. Eine vollständige Trocknung der Oberfläche vor einer optischen Messung ist mit Kosten verbunden, zudem kostet diese Reinigung und Trocknung Zeit, so dass eine fertigungsnahe Messung mit eventueller Rückführung der Messwerte zur Steuerung des Bearbeitungsprozesses erschwert wird. Wird dagegen der, gegebenenfalls gereinigte, Kühlschmierstoff als "Trägermedium" für die Messstrahlung des optischen Messsystems verwendet, werden die im Zusammenhang mit der Restbenetzung eventuell auftretenden Probleme vermieden, so dass eine prozessnahe optische Messung möglich wird, die auch eine unmittelbare Rückführung von Messwerten zur Steuerung des Bearbeitungsprozesses in einer Regelschleife ermöglicht.

Bei Verwendung mindestens eines optischen Messsensors ist z.B. eine optische Erfassung der Oberflächenstruktur, der Winkel von Bearbeitungsspuren relativ zueinander und/oder zu einer Vorzugsrichtung der Bohrung (beispielsweise der Axialrichtung), von Riefenbreiten oder Schnittbildern oder dergleichen erfassbar. Auch eine Tiefeninformation, beispielsweise über die Oberflächenrauheit, ist mit geeigneten optischen Sensoren z.B. durch Interferometrie oder Streifenprojektion möglich. Eine gegen Erschütterungen unempfindliche Fixierung solcher Messsensoren gegenüber der zu messende Werkstückoberfläche ermöglicht hochgenaue Ergebnisse auch bei ggf. länger andauernder Messwertaufnahme (Belichtungszeit).

Gemäß einem weiteren Aspekt der Erfindung wird das Messverfahren zum Messen der Werkstückoberfläche an einem Werkstück mit Hilfe mindestens einer Messsonde durchgeführt, die einen Sondenkörper und mindestens einen an dem Sondenkörper angebrachten Messsensor aufweist. Das automatisiert durchführbare Messverfahren beginnt mit einer, vorzugsweise antriebsgesteuerten, Positionierung der Messonde relativ zum Werkstück, beispielsweise durch Einführung der Messsonde in eine Bohrung. Danach erfolgt einem, vorzugsweise antriebsgesteuerte, Fixierung des Sondenkörpers an dem Werkstück in einer Messposition durch Abstützen des Sondenkörpers an der zu messenden Werkstoffoberfläche mit Hilfe einer Abstützeinrichtung, die mindestens ein Abstützorgan umfasst. Danach wird die Messung innerhalb eines Messbereiches durchgeführt. Der Messbereich kann eindimensional, d.h. im Wesentlichen linienförmig, oder zweidimensional, d.h. flächig ausgedehnt sein.

Dieser Aspekt der Erfindung kann bei Verwendung eines oder mehrerer optischer Messsensoren genauso nützlich sein wie bei Verwendung anderer nicht-erfindungsgemäße Messsensoren, z.B. eines oder mehrerer taktiler Messsensoren. Dieser Aspekt kann somit unabhängig von den sonstigen Merkmalen des ersten Erfindungsaspekts vorteilhaft sein.

Es hat sich gezeigt, dass durch die Fixierung des Sondenkörpers durch Abstützung an der zu messenden Werkstückoberfläche eine besonders zuverlässige und gegen Erschütterungen weitgehend unempfindliche Festlegung des Sondenköpers am Werkstück, z.B. innerhalb einer Bohrung, gewährleistet werden kann. Hierdurch werden hochgenaue Messungen auch in fertigungsnahen Umgebungen möglich, beispielsweise auf einer innerhalb einer Fertigungshalle aufgestellten, gesonderten Messstation oder mit einem in eine Bearbeitungsmaschine integrierten Messsystem. Wenn zusätzlich zu der Fixierung auch die richtige Relativpositionierung der Messsonde zum Werkstück, beispielsweise durch Einführung der Messsonde in die Bohrung vor der Messung, mit Hilfe geeigneter elektromotorischer, hydraulischer oder andersartiger Antriebe antriebsgesteuert erfolgt, kann der gesamte Messvorgang ohne Eingriff eines Bedieners automatisch durchgeführt werden. Hierdurch werden besonders schnelle Messvorgänge mit reproduzierbaren Messergebnissen ermöglicht.

Die Messung kann unmittelbar im Anschluss an den letzten Bearbeitungsschritt am fertig bearbeiteten Werkstück vorgenommen werden, um das fertig bearbeitete Werkstück zu qualifizieren. Es ist auch möglich, das Werkstück in jeder beliebigen Zwischenstufe der Bearbeitung zu messen, beispielsweise unmittelbar vor einem letzten, qualitätsbestimmenden Bearbeitungsschritt. Die Messung der Werkstückoberfläche kann beispielsweise unmittelbar nach einem vorangehenden Bearbeitungsschritt der Werkstückoberfläche und/oder unmittelbar von einem nachfolgenden Bearbeitungsschritt an der Werkstückoberfläche an einem in seiner Bearbeitungs-Spannvorrichtung eingespannten Werkstück durchgeführt werden. Es ist somit kein Umspannen des Werkstückes zwischen der Bearbeitung und der Messung erforderlich.

Es ist auch eine Messung an einer von der Bearbeitungsvorrichtung gesonderten Messvorrichtung möglich. Dadurch kann erreicht werden, dass die zur Messung erforderliche Messzeit nicht in die für die Bearbeitung maßgebliche Taktzeit eingeht, insbesondere dann nicht, wenn die Messzeit kürzer ist als die Bearbeitungszeit.

Besonders in fertigungsnahen Umgebungen ist eine Entkoppelung der Messung von Umwelteinflüssen durch Vibration oder dergleichen nützlich, um reproduzierbare, genaue Messergebnisse zu erhalten. Bei einer Ausführungsform definiert die Abstützeinrichtung einen in Axialrichtung eines zylindrisch gekrümmten Werkstückabschnittes ausgedehnten Abstützbereich und die Messung wird innerhalb eines Messbereichs durchgeführt, der mindestens teilweise mit dem Abstützbereich überlappt. Insbesondere kann die Messung innerhalb eines Messbereichs durchgeführt werden, der vollständig innerhalb des Abstützbereichs liegt. Hierzu kann die Abstützeinrichtung beispielsweise Abstützstellen sowohl axial oberhalb, als auch axial unterhalb des Messbereiches und/oder in Umfangsrichtung auf beiden Seiten des Messbereiches haben. Dadurch kann z.B. im Vergleich zu konventionellen Bohrungs-Messsystemen, die eine Abstützung der Messsonde nur in unmittelbarer Nähe der Eingangsöffnung einer zu messenden Bohrung vorsehen, eine deutlich verbesserte Entkopplung der Messung von externen Vibrationen und anderen Erschütterungen sichergestellt werden. Außerdem kann z.B. bei der Messung von Bohrungen erreicht werden, dass die Genauigkeit der Messergebnisse weitgehend unabhängig von der axialen Position des Messbereichs innerhalb der Bohrung wird, so dass Messungen in der Nähe des von der Eintrittsseite abgewandten Endes der Messsonde unmittelbar vergleichbar mit in der Nähe der Eintrittsöffnung der Bohrung durchgeführten Messungen sind. Auf rechnerische Korrekturen der Messergebnisse kann verzichtet werden.

Bei manchen Ausführungsformen ist mindestens ein an dem Sondenkörper angebrachter Messsensor relativ zu dem Sondenkörper beweglich angebracht. Dadurch kann der Messsensor während der Messung mit Hilfe eines Sensor-Antriebs relativ zu dem fixierten Sondenkörper bewegt werden. Hierdurch sind auch bei im Wesentlichen punktförmig wirkenden Messsensoren größere Messbereiche zugänglich. Alternativ oder zusätzlich ist es auch möglich, dass mindestens ein Messsensor fest am Sondenkörper angebracht ist, so dass bei fixiertem Sondenkörper auch die Position des Messsensors fixiert ist. Solche Messsensoren, die beispielsweise nach einem optischen Messprinzip arbeiten, können beispielsweise einen linienförmigen oder zweidimensional ausgedehnten, flächenförmigen Messbereich haben.

Bei manchen Ausführungsformen wird die zu messende Werkstückoberfläche bei der Messung entlang einer linearen Messstrecke abgetastet. Hierdurch sind insbesondere Messungen des Oberflächenprofils möglich, um daraus charakteristische Werte für die erzielte Oberflächenrauhigkeit abzuleiten. Ein Messsensor für eine Rauhigkeitsmessung kann mit Hilfe eines geeigneten Messsensor-Antriebes über die Werkstückoberfläche bewegt werden. Lineare Messstrecken verlaufen bevorzugt entweder in Axialrichtung zylindrisch gekrümmten Werkstückabschnitte oder in Umfangsrichtung innerhalb einer senkrecht zur Achse des Werkstückabschnittes ausgerichteten Messebene.

Diese Abtastung erfolgt erfindungsgemäß optisch. Ein Messsensor hat dementsprechend eine Messoptik, die an ausgewählten Messorten der Werkstückoberfläche entlang einer Messstrecke definierter Länge bewegt werden.

Bei einer Ausführungsform ist vorgesehen, dass vor oder nach der Durchführung der Messung der Messsensor in den Bereich einer Referenzeinrichtung mit einer bekannten Oberflächenstruktur verfahren und das Messsystem durch Messung der Referenzeinrichtung kalibriert wird. Bei der Referenzeinrichtung kann es sich beispielsweise um einen Referenzring handeln, der in der Nähe des Eingangsbereichs einer zu messenden Bohrung oder dicht neben der Bohrung angeordnet ist. Vor Einfahren des Messsystems in die Bohrung, nach dem Ausfahren aus dieser oder während der Messung in kurzen Messpausen kann die mit bekannten Oberflächeneigenschaften ausgestattete Innenfläche der Referenzeinrichtung gemessen werden. Stimmen die bei dieser Messung erhaltenen Messwerte im Rahmen der Toleranzen mit den aufgrund der Kalibrierung zu erwartenden Messwerten überein, so kann die Messung am Werkstück fortgesetzt werden. Bei signifikanten Abweichungen, z.B. infolge Verschleiß oder Zerstörung des Messsensors, kann ein Austausch des Messsystems gegen ein anderes, z.B. ein nicht verschlissenes Messsystem vorgenommen werden. Hierdurch sind engere Fertigungstoleranzen bei den zu bearbeitenden Werkstücken und eine Verringerung des Ausschussanteiles möglich.

Besonders günstig ist es, wenn die Oberfläche der Referenzeinrichtung eine Oberflächenstruktur hat, die in den wesentlichen Rauheitskennwerten der zu messenden Werkstückoberfläche weitgehend entspricht. Hierdurch sind besonders genaue Messungen möglich.

Ein zur Durchführung des Messverfahrens geeignetes Messsystem hat gemäß einem ersten Aspekt mindestens einen optischen Messsensor und eine Einrichtung zum Füllen eines Zwischenraumes zwischen dem Messsensor und der zu messenden Werkstückoberfläche im Messbereich in einer für Messstrahlung transparenten Flüssigkeit. Die optische Messung kann daher durch die transparente Flüssigkeit hindurch an der mit der transparenten Flüssigkeit benetzten Werkstückoberfläche erfolgen. Der Zwischenraum wird erfindungsgemäß mit der bei der Bearbeitung der Werkstückoberfläche verwendeten Bearbeitungsflüssigkeit, z.B. Honöl oder Kühlschmierstoff, gefüllt, so dass die Bearbeitungsflüssigkeit als Immersionsflüssigkeit für ein optisches Messsystem dienen kann. Falls erforderlich, kann die Bearbeitungsflüssigkeit vor der Verwendung als Immersionsflüssigkeit mit Hilfe einer geeigneten Reinigungseinrichtung gereinigt werden, indem beispielsweise ein Teil der Bearbeitungsflüssigkeit gefiltert und dabei von Bearbeitungsrückständen, beispielsweise Honspänen, befreit wird.

Bei manchen Ausführungsformen ist eine Reinigungseinrichtung zur Reinigung des Messbereiches vor und/oder während der Messung vorgesehen, damit die Messung nicht durch an der Werkstückoberfläche anhaftende Bearbeitungsrückstände beeinflusst wird. Die Reinigungseinrichtung kann insbesondere zum Spülen der Werkstückoberfläche mit einer Flüssigkeit eingerichtet sein, wobei die Spülflüssigkeit auch als Immersionsflüssigkeit bei der optischen Vermessung genutzt werden kann. Die Reinigungseinrichtung kann auch so ausgestaltet sein, dass die Werkstückoberflache zunächst pneumatisch, beispielsweise mittels Druckluft, gereinigt und anschließend mit einer Flüssigkeit gespült wird, die vorzugsweise auch als Immersionsflüssigkeit für die optische Messung genutzt wird.

Bei manchen Ausführungsformen ist eine aktive Beleuchtung des optisch zu vermessenden Messbereiches vorgesehen. Dazu wird mindestens eine dem Messsensor zugeordnete Lichtquelle bereitgestellt, die den Messbereich während der Messung zumindest zeitweise beleuchtet. Als Lichtquellen können beispielsweise LED-Leuchten oder Halbleiterlaser verwendet werden.

Bei manchen Ausführungsformen hat der optische Messsensor mindestens ein Mikroskopobjektiv. Diesem kann ein optoelektronischer Wandler, beispielsweise ein CCD-Chip zugeordnet sein, um das von dem Mikroskopobjektiv erfasste Bild in elektrische Signale umzuwandeln, die von einer Auswerteinrichtung weiterverarbeitet werden.

Bei Verwendung des optischen Messsensors sollte das Messsystem so eingerichtet sein, dass der optische Messsensor zumindest für die Zeit der Messung in einem geeigneten Abstand zur Werkstückoberfläche angebracht ist und dort gehalten wird. Bei bevorzugten Ausführungsformen ist hierzu eine dem Messsensor zugeordnete Abstützeinrichtung mit mindestens einem mit Hilfe eines Zustellsystems in Richtung auf die zu messende Werkstückoberfläche zustellbaren Abstützorgan zur Fixierung des Sondenkörpers an dem Werkstück in einer Messposition durch Abstützen des Sondenköpers an der Werkstückoberfläche vorgesehen. Vorzugsweise hat die Abstützeinrichtung mehrere Abstützorgane, die einen in Axialrichtung eines zu messenden gekrümmten Werkstückabschnittes ausgedehnten Abstützbereich definieren und die Messsonde hat einen Messbereich, der mindestens teilweise mit dem Abstützbereich überlappt und sich vorzugsweise vollständig innerhalb des Abstützbereiches befindet.

Bei einer bevorzugten Ausführungsform zur Messung der Innenfläche einer Bohrung ist mindestens eine Messsonde in einem Messkopf integriert, der einen Satz von mehreren um den Umfang des Messkopfes verteilten Abstützorganen zur Abstützung des Messkopfes an der Innenfläche der Bohrung umfasst, wobei mindestens eines der Abstützorgane über ein Zustellsystem in Richtung auf die Innenfläche der Bohrung zustellbar ist. Vorzugsweise ist ein Satz von mehreren um den Umfang des Messkopfes verteilten und über ein Zustellsystem betätigbaren Abstützorganen vorgesehen. Bei einem Messkopf mit mehreren um den Umfang verteilten, zustellbaren Abstützorganen kann der wirksame Abstützdurchmesser des Messkopfes durch Zustellung bzw. Zurückziehen der Abstützorgane in verschiedenen Radialrichtungen zur Messkopfachse verstellt werden. Es gibt auch Ausführungsformen mit mehreren Abstützorganen, von denen nur eines in Radialrichtung zustellbar ist. Das zustellbare Abstützorgan kann sich beispielsweise an der der Messsonde gegenüberliegenden Seite des Messkopfes befinden, während auf der Seite der Messsonde beidseitig der Messsonde fest angebrachte, unbewegliche Abstützorgane, beispielsweise Abstützleisten, angebracht sind. In diesem Fall wäre bei verschiedenen zu messenden Durchmessern in dem Bereich der starren Abstützleisten der Abstand zwischen der Messsonde und der zu messenden Werkstückoberfläche nahezu unabhängig vom Durchmesser.

Ein Abstützorgane ist vorzugsweise als in Axialrichtung verlaufende Abstützleiste ausgestaltet, die eine großflächige und damit die Oberflächenstruktur der Innenfläche schonende Abstützung ermöglichen. Es kann sich um durchgehende oder geteilte Abstützleisten handeln. Alternativ oder zusätzlich sind auch Abstützorgane möglich, deren Abstützbereich sich in Umfangsrichtung der Bohrung weiter ausdehnt als in Axialrichtung. Ein Abstützorgan kann zumindest in den in Kontakt mit der Innenfläche mit der Bohrung tretenden Bereichen aus einem Kunststoff, aus Gummi, einem Elastomer geeigneter Härte (z.B. Vulkollan®), einem Metall, einem Hartmetall oder aus einer Keramik bestehen.

Der Messkopf kann insbesondere nach Art eines Honwerkzeuges aufgebaut sein, wobei der Messkopf im Wesentlichen bohrungsfüllend dimensioniert sein kann und die durch das Zustellsystem radial zustellbaren Abstützorgane trägt.

Bei einer Ausführungsform, die besonders für die Messung von zylindrisch gekrümmten Außenflächen angepasst ist, ist mindestens eine Messsonde in einen Messkopf integriert, der von außen antriebsgesteuert an die zu messende Werkstückoberfläche herangeführt wird und der einen Satz von mehreren, ggf. über ein Zustellsystem betätigbaren, Abstützorganen hat, die in Richtung auf den zu messenden Werkstückabschnitt zustellbar sind, insbesondere im Wesentlichen in Radialrichtung des Werkstückabschnittes. Die Abstützorgane können, wie bei einer Ausführungsform für die Messung von Bohrungsinnenflächen, als in Axialrichtung des zu messenden Werkstückes langgestreckte Abstützleisten, gegebenenfalls auch als sich in Umfangsrichtung des zu messenden Werkstückes erstreckende, gekrümmte Abstützleisten, gestaltet sein.

Bei manchen Ausführungsformen befindet sich der Messsensor in Umfangsrichtung und/oder in Axialrichtung zwischen Abstützorganen bzw. zwischen durch Abstützorgane definierten Abstützstellen. Hierdurch ist eine gegen Vibrationen und andere Erschütterungen besonders unempfindliche Anordnung des Messsensors möglich, die hochgenaue Messergebnisse erlaubt.

Bei einer Ausführungsform, die besonders für prozessnahe Messungen an gehonten oder durch Finishen bearbeiteten Werkstücken geeignet ist, ist der Sensorkörper im Bereich des Messsensors öldicht gekapselt. Hierdurch kann auf eine Reinigung des zu messenden Werkstückes zwischen einer vorausgehenden Bearbeitung und der Messung verzichtet werden. Die Messung kann daher ohne großen Zeitverlust auch zwischen einzelnen Honoperationen durchgeführt werden.

Manche Ausführungsformen erfindungsgemäßer Messsysteme umfassen ein Messsensor-Zustellsystem zur vorzugsweise stufenlosen Einstellung der radialen Position des Messsensors relativ zu einer z.B. parallel oder koaxial zu einer Bohrungsachse oder zur Achse eines zylindrischen Werkstückabschnittes auszurichtenden Sondenachse. Hierdurch kann die für eine Messung maßgebliche radiale Null-Position des Messsensors in Bezug auf die parallel zur Bohrungsachse oder Werkstückabschnittsachse auszurichtende Sondenachse in Radialrichtung verlagert werden, um eine schnelle Anpassung der Messsonde an unterschiedliche Durchmesser der zu messenden, konvex oder konkav gekrümmten Werkstückoberfläche zu gewährleisten. Dafür kann z.B. der Sondenkörper als Ganzes radial verschoben werden und/oder der Messsensor relativ zum Sondenkörper.

Die Erfindung betrifft auch eine Bearbeitungsmaschine, der mindestens ein erfindungsgemäßes Messsystem zugeordnet ist. Das Messsystem kann z.B. in eine Honmaschine integriert sein, beispielsweise in der Art, dass eine Spindel der Honmaschine als Messspindel des Messsystems genutzt wird. Es ist auch möglich, das Messsystem als eine von einer Bearbeitungsmaschine gesonderte Messstation auszulegen.

Eine Auswerteeinrichtung des Messsystems kann mit einer Steuereinrichtung der Bearbeitungsmaschine signalübertragend verbunden bzw. Teil dieser Steuereinrichtung sein und gemeinsam mit dieser eine Regeleinrichtung zur Steuerung der Bearbeitung auf Basis von mit dem Messsystem erhaltenen Messdaten bilden. Beispielsweise können mit dem Messsystem Rauheitsparameter von mehreren in einem Bearbeitungsprozess bearbeiteten Werkstücken aufgenommen und deren Mittelwert gebildet werden. Aus dem Mittelwert kann über einen geeigneten Steueralgorithmus mindestens ein Steuerparameter für die Steuerung der Bearbeitungsmaschine gewonnen werden. Beispielsweise kann die Bearbeitungszeit und/oder der Anpressdruck von Schneidstoff (z.B. Honsteinen oder Schleifband) auf Basis von Messwerten des Messsystems gesteuert werden, um auch bei größeren Serien zu bearbeitender Werkstücke enge Fertigungstoleranzen einhalten zu können.

Die vorstehenden und weitere Merkmale gehen außer aus den Ansprüchen auch aus der Beschreibung und den Zeichnungen hervor. Dabei können die einzelnen Merkmale jeweils für sich alleine oder zu mehreren in Form von Unterkombinationen bei einer Ausführungsform der Erfindung und auf anderen Gebieten verwirklicht sein und vorteilhafte sowie für sich schutzfähige Ausführungsformen darstellen. Bevorzugte Ausführungsformen werden an Hand der beigefügten Zeichnungen erläutert.
Fig. 1 zeigt eine schematische Darstellung einer mehrspindeligen Honmaschine, in die eine Ausführungsform eines Messsystemes integriert ist;
Fig. 2 zeigt eine Ausführungsform eines Messkopfes mit einer Abstützeinrichtung, die mehrere in Radialrichtung zustellbare, axial verlaufende, leistenförmige Abstützorgane und eine Umfangsrichtung zwischen Abstürzorganen angeordnete Messsonde hat;
Fig. 3 zeigt eine schematische Axialansicht einer anderen Ausführungsform eines Messkopfes mit radial zustellbaren Abstützorganen einer Abstützeinrichtung und zwei durch ein separates Zustellsystem radial zustellbare Messsonden;
Fig. 4 zeigt einen axialen Schnitt und mehrere Querschnitte durch Ausführungsformen von Messköpfen mit radial fixierten Messsonden;
Fig. 5 zeigt einen axialen Schnitt und mehrere Querschnitte durch Ausführungsformen von Messköpfen mit radial verschiebbaren Messsonden;
Fig. 6 zeigt eine schematische Darstellung eines optischen Messsensors; und
Fig. 7 zeigt eine Ausführungsform eines Messkopfes zur Messung zylindrisch gekrümmter Werkstückaußenflächen mit einer Abstützeinrichtung, die mehrere in Radialrichtung zustellbare, axial verlaufende, leistenförmige Abstützorgane und eine Umfangsrichtung zwischen Abstürzorganen angeordnete Messsonde hat.

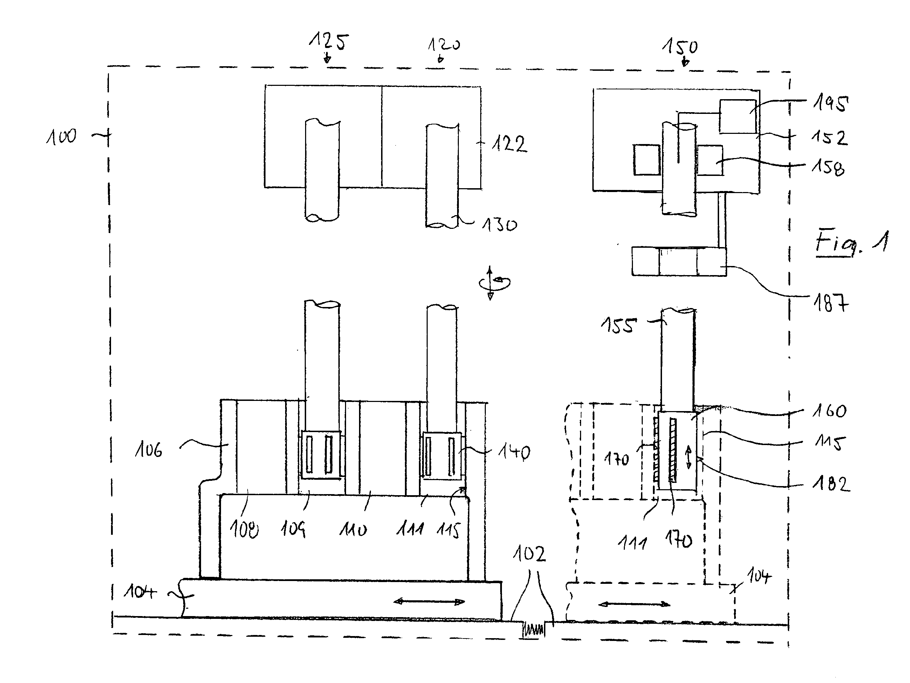

In Fig. 1 ist schematisch die Vorderansicht einer Honmaschine 100 gezeigt, die zur Bearbeitung von Innenflächen von Bohrungen in Werkstücken eingesetzt werden kann, um eine oder mehrere Honoperationen an dem Werkstück durchzuführen. Auf dem Maschinenbett 102 der Honmaschine ist eine Aufspannplatte 104 befestigt, die ein darauf aufgespanntes Werkstück 106 trägt, bei dem es sich im Beispielsfall um einen Motorblock einer vierzylindrigen Brennkraftmaschine handelt. In dem Motorblock sind mehrere Zylinderbohrungen 108 bis 111 mit generell vertikaler Ausrichtung ihrer Zylinderachsen gebildet. Die durch die Innenflächen 115 der Zylinderbohrungen gebildeten Zylinderlaufflächen werden auf der Honmaschine einer qualitätsbestimmenden Endbearbeitung unterzogen, bei der sowohl die Makroform der Zylinderlaufflächen, als auch deren Oberflächentopographie bzw. Oberflächenstruktur durch geeignetes Honprozesse erzeugt werden.

Bei der zweispindligen Honmaschine sind auf einer nicht näher gezeigten, portalartigen Trägerkonstruktion zwei im Wesentlichen identisch aufgebaute Honeinheiten 120, 125 befestigt, die abwechselnd oder gleichzeitig bei der Werkstückbearbeitung eingesetzt werden können. Jede Honeinheit umfasst einen an der Trägerkonstruktion befestigten Spindelkasten 122, der die Honspindel 130 führt. Die Honspindel lässt sich mit Hilfe eines am Spindelkasten befestigten Spindelmotors um ihre Längsachse drehen. Das untere Ende der Honspindel wird durch eine Gelenkstange gebildet, an deren unteres, freies Ende das als Bearbeitungswerkzeug dienende Honwerkzeug 140 begrenzt beweglich mechanisch angekoppelt ist. Ein an dem Spindelkasten montierter Hubantrieb bewirkt die Vertikalbewegung der Honspindel beim Einführen des Werkzeuges in das Werkstück bzw. beim Herausziehen aus dem Werkstück und wird während der Honbearbeitung so angesteuert, dass das Honwerkzeug innerhalb der Bohrung des Werkstückes eine vertikale Hin- und Herbewegung ausführt, die sich der durch den Spindelmotor erzeugten Drehbewegung der Spindel um ihre Längsachse überlagert. Da der Aufbau solcher Honeinheiten grundsätzlich bekannt ist, wird er hier nicht näher erläutert.

Unmittelbar neben den Honeinheiten ist ein in die Honmaschine integriertes Messsystem 150 als integraler Bestandteil der Honmaschine integriert. Das einspindlige Messsystem 150 hat einen an der Trägerkonstruktion der Honmaschine befestigten Messspindelkasten 152, der eine vertikal ausgerichtete Messspindel 155 führt. Am Spindelkasten ist ein Messspindelantrieb 158 angebracht, der dazu ausgelegt ist, die Messspindel parallel zu ihrer Längsachse vertikal auf und ab zu bewegen. Weiterhin ist der Messspindelantrieb in der Lage, die Messspindel schrittweise um vorgebare Winkelbeträge um ihre Längsachse zu drehen. Das untere Ende der Messspindel wird durch eine Gelenkstange gebildet, an deren unteres, freies Ende ein nach Art eines Honwerkzeuges aufgebauter Messkopf 160 des Messsystems begrenzt beweglich und lösbar mechanisch angekoppelt ist.

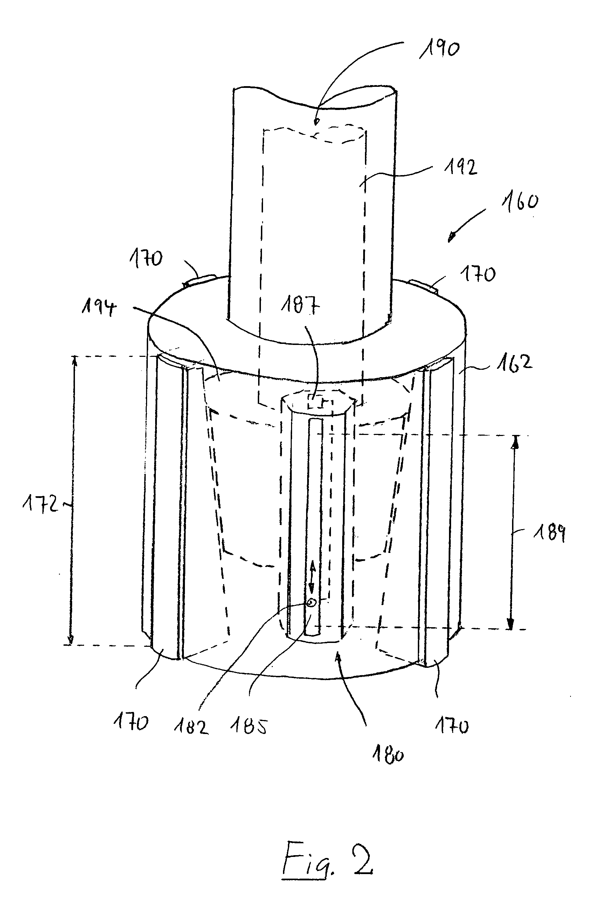

Der in Fig. 2 im Detail gezeigte Messkopf hat einen im Wesentlichen bohrungsfüllenden, zylindrischen Messkopfkörper 162, der an seinem Umfang vier gleichmäßig um den Umfang verteilte Abstützorgane 170 in Form von axial langgestreckten Abstützleisten trägt. Die Abstützorgane sind innerhalb des Messkopfkörpers in Radialrichtung beweglich geführt, durch nicht gezeigte Rückholfedern in eine nach radial innen gerichtete Einzugsrichtung vorgespannt und können mit Hilfe eines Zustellsystems 190 in Radialrichtung zugestellt werden, um den Abstützdurchmesser des Messkopfes einzustellen. Das Zustellsystem umfasst eine innerhalb der Messspindel axial beweglichen Zustellstange 192, an deren unterem Ende ein Zustellkonus 194 angebracht ist, dessen nach außen gerichtete Konusfläche mit entsprechenden, nach innen gerichteten Schrägflächen der Abstützorgane nach Art eines Keilantriebes zusammenwirken.

Die nach außen gerichteten Abstützflächen der Abstützleisten 170 erstrecken sich im Wesentlichen über die gesamte axiale Länge des Messkopfes und definieren damit die axiale Ausdehnung eines Abstützbereiches 172. Wie beispielsweise in Fig.1 gezeigt, kann sich der Abstützbereich über mehr als die Hälfte oder mehr als 60% oder 70% oder 80% der axialen Länge der Bohrung erstrecken und insbesondere auch den Mittelbereich der Bohrung zwischen Eintrittsöffnung und dem unteren Ende erfassen.

Die vom Messkopfkörper 162 getragene Messsonde 180 ist für eine Messung der Oberflächenrauhigkeit der Innenfläche im Tastschnittverfahren ausgelegt. Hierzu hat der Messsensor 185 der Messsonde eine durch eine Diamantnadel gebildete Tastspitze 182, die mit Hilfe eines in die Messsonde integrierten elektrischen Sensorantriebs 187 innerhalb eines Messbereichs 189 entlang einer geradlinigen Messstrecke parallel zur Zentralachse des Messkopfes gradlinig verfahrbar ist. Die beim Abgleiten der Tastspitze auf der rauen Innenfläche entstehende Auf- und Abbewegung der Tastspitze wird mit Hilfe eines elektromechanischen Wandlers in elektrische Signale umgewandelt, die über nicht gezeigte elektrische Leitungen einem ebenfalls nicht gezeigten Auswertesystem zugeführt werden. Gleichzeitig wird die Position des Messtasters entlang der Messstrecke durch einen Wegaufnehmer erfasst und entsprechende Wegsignale ebenfalls zur Auswerteeinrichtung geleitet, die aus den Signalen ein Rauheitsprofil ermittelt, aus dem in an sich bekannter Weise geeignete Rauheitsparameter der Innenfläche ermittelt werden.

Die verschmutzungsempfindlichen Teile des Messsensors, insbesondere die elektromechanischen Wandler, sind innerhalb des Gehäuses des Messsensors öldicht gekapselt. Hierzu kann zwischen der Tastspitze und dem Gehäuse eine Öldichtung vorgesehen sein, durch die ein beweglicher Halter für die Tastspitze beweglich hindurch geführt ist. Die Tastspitze kann durch geeignete Maßnahmen beim Einfahren in die Bohrung (und beim Herausfahren) gegen mechanische Beschädigung geschützt werden, beispielsweise durch Einziehen der Tastspitze oder durch Herausfahren eines die Tastspitze umschließenden Schutzelementes.

Wie in Fig. 2 ersichtlich, liegt der lineare Messbereich 189 der Messsonde vollständig innerhalb des durch die in Umfangsrichtung benachbart angeordneten Abstützleisten 170 definiertem Abstützbereich 172.

Die außen liegenden, durch ein hartes Elastomermaterial gebildeten Abstützflächen der Abstützorgane haben sowohl axial oberhalb, als auch axial unterhalb des Messbereiches 189 Abstützstellen. Die Messsonde mit dem nicht-erfindungsgemäßen taktilen Messsensor 185 liegt in Umfangsrichtung vollständig zwischen Abstützorganen. Hierdurch ist eine erschütterungsunempfindliche Fixierung der Messsonde bzw. des Messsensors innerhalb der Werkstückbohrung gesichert, die ein ungewollte Relativbewegung zwischen Messsonde und Werkstück bzw. zu messender Oberfläche während der Messung auch in erschütterungsgefährdeten Messumgebungen sicherstellt.

Zur Durchführung einer Rauheitsmessung an der Innenfläche einer bearbeiteten Bohrung kann beispielsweise wie folgt vorgegangen werden. Nach Abschluss der Honoperation, deren Bearbeitungsergebnis überprüft werden soll, werden die Honspindeln aus den Zylinderbohrungen durch Zurückziehen nach oben ausgefahren. Anschließend wird das auf der Aufspannplatte 104 aufgespannte Werkstück gemeinsam mit der Aufspannplatte mit Hilfe eines geeigneten Fördersystems aus der in Fig. 1 durchgezogen gezeichneten Bearbeitungsposition in die in Fig. 1 gestrichelt gezeichnete Messposition transportiert. Der dem Messsystem zugeordnete Teil des Maschinenbettes 102 ist gegenüber dem der Bearbeitungsposition zugeordneten Teil elastisch entkoppelt. Nach Ausrichten des Werkstückes relativ zur nach oben zurückgezogenen Messspindel 155 wird die Messspindel mit Hilfe des Messspindelantriebs 158 nach unten abgesenkt, um den Messkopf 160 in die zu messende Zylinderbohrung 111 einzuführen. In dieser Einführphase sind die Abstützleisten 170 in ihre radial innen liegende Rückzugsposition zurückgezogen, so dass der durch die Außenflächen der Abstützorgane definierte Wirkdurchmesser des Messkopfes einige Millimeter kleiner ist als der Innendurchmesser der Zylinderbohrung. Hierdurch ist eine schonende Einführung des Messkopfes in die Zylinderbohrung ohne die Gefahr der Beschädigung der zu messenden Innenfläche gesichert. Auch die Tastspitze der Messsonde ist in ihrer zurückgezogenen Position, um Beschädigungen zu vermeiden.

Anschließend wird die Messspindel gegebenenfalls mit Hilfe des Messspindelantriebes 158 begrenzt verdreht, um die Tastspitze in den zu messenden Bereich der Innenfläche der Bohrung zu verfahren. Die Einstellung der richtigen Drehposition der Messspindel kann auch vor oder während der Einführung des Messkopfes in die Zylinderbohrung durchgeführt werden.

Danach wird die antriebsgesteuerte Fixierung des Sondenkörpers bzw. des Messkopfes 160 innerhalb der Bohrung eingeleitet, indem durch die Antriebseinheit 195 des Zustellsystems die Zustellstange 192 in Richtung Messkopf zugestellt wird. Dadurch werden die Abstützleisten 170 langsam nach radial außen in Richtung der Innenfläche zugestellt, bis sie mit einer geeigneten Vorspannkraft sicher an der Innenfläche anliegen. In dieser Position wird das Zustellsystem durch eine Verriegelungseinrichtung verriegelt, so dass eine unbeabsichtigte Auflösung der Fixierung während der Messung vermieden wird. Da nun der Messkopf 160 sicher am Werkstück 106 festgelegt ist, kann der antriebsseitige Teil der Messspindel vom messkopfseitigen Teil der Messspindel teilweise entkoppelt werden, so dass sich eventuelle Vibrationsbewegungen des antriebsseitigen Teils nicht mehr auf den im Werkstück fixierten Messkopf übertragen können.

In wieweit eine Abkopplung erforderlich ist, hängt von der Messumgebung und der Messaufgabe ab. Bei anderen Ausführungsformen ist das Messsystem in einer von der Honmaschine gesonderten Messstation untergebracht, wodurch eine starke Entkopplung von Bearbeitungsvibrationen möglich wird. Die separate Messmaschine kann in unmittelbarer Nähe der Honmaschine im Werkstückfluß unmittelbar dahinter angeordnet sein.

Danach wird die Messung durchgeführt. Hierzu wird zunächst die Tastspitze 186 nach radial außen in Berührungskontakt mit der Innenfläche verfahren. Anschließend wird die Tastspitze mit Hilfe des Sensorantriebes 187 über die gewünschte Messstrecke verfahren und dabei ein Rauheitsprofil aufgenommen. Nach Erreichen des Endpunktes der programmierten Messstrecke wird die Tastspitze automatisch in ihre Rückzugsposition im Sondenkörper zurückgezogen. Da an der Messspindel Weggeber zur Erfassung der axialen Position des Messkopfes und Winkelgeber zur Erfassung der Drehposition der Messspindel vorhanden sind, kann die Lage der Messstrecke auf der Innenfläche der Bohrung eindeutig einem bestimmten axialen und Umfangsbereich der Bohrungsinnenfläche zugeordnet werden.

Eine Messstrecke kann sich über den gesamten maximal verfügbaren Messbereich 189 der Messsonde erstrecken. Es ist auch möglich, nur Teilbereiche dieses Messbereiches für die Messung zu nutzen. Beispielsweise können in ein und der selben Einspannstellung des Messkopfes mehrere mit Abstand vertikal übereinander liegende Messstrecken gemessen werden, um beispielsweise repräsentative Messungen für den Eintrittsbereich der Bohrung, für einen Mittelbereich der Bohrung und für einen dem Eintrittsbereich abgewandten unteren Bereich der Bohrung durchzuführen. Sofern Messungen an anderen Umfangspositionen der Bohrung gewünscht sind, kann die Fixierung der Messsonde durch Zurückziehen der Abstützleisten aufgehoben und der Messkopf danach durch Verdrehen der Messspindel in der Bohrung z.B. um 30°, 45°, 90° oder 180° verdreht werden, um die Messsonde in Umfangsrichtung zu einem neuen zu messenden Bereich zu verschieben. Danach wird der Messkopf in bereits beschriebener Weise wieder innerhalb der Bohrung antriebsgesteuert fixiert, bevor die nächste Messung beginnt.

Bei dem nicht-erfindungsgemäßen taktil arbeitenden Messsystem kann es beispielsweise durch Verschleiß an der Tastspitze 182 im Laufe der Zeit zu Verfälschungen der Messergebnisse kommen. Um eine Beeinträchtigung der Messgenauigkeit durch derartige Effekte zu vermeiden, befindet sich bei der gezeigten Ausführungsform mit Abstand oberhalb der zu messenden Zylinderbohrung 111 eine Kalibriereinrichtung in Form eines am Messspindelkasten 152 befestigten Referenzringes 187 mit einer kreiszylindrischen Innenfläche, deren Durchmesser im Wesentlichen dem Durchmesser der Zylinderbohrung 111 entspricht. Der Referenzring kann beispielsweise aus einem Stahlwerkstoff, einer Keramik oder einem anderen korrosionsbeständigen und verschleißfesten Material bestehen. Wird beispielsweise ein Motorblock aus partikelverstärktem Leichtmetallwerkstoff mit zurückgesetzter Metallmatrix messen, so kann auch der Referenzring 187 aus einem solchen Material mit charakteristischer Plateaustruktur bestehen. Der Referenzring besitzt an seiner Innenfläche eine definierte Oberflächenstruktur, der bestimmte festgestellte Rauheitskennwerte entsprechen. Die Rauheitskennwerte der Referenzstruktur wurden in einem Referenzmessprozess mit Hilfe eines klassischen Rauheitsmesssystems unter im Wesentlichen gleichen Messbedingungen ermittelt. Die Oberflächenstruktur bzw. die Rauheit ist normalerweise der an der bearbeiteten Zylinderinnenfläche angestrebten Oberflächenstruktur bezüglich aller geforderten Rauheitskennwerte sehr ähnlich bzw. mit dieser identisch. Das Messsystem kann vor der Messung einer Zylinderinnenfläche, in einer Messpause während der Messung und/oder nach Abschluss einer solchen Messung an der Referenzeinrichtung eine Test-Messung vornehmen. Werden bei dieser Test-Messung alle aufgrund des Referenzmessprozesses zu erwartenden Rauheitskennwerte erreicht, so ist davon auszugehen, dass das Messsystem auch am zu messenden Werkstück im Rahmen der Toleranzen die richtigen Messwerte liefert. Bei signifikanten Abweichungen der Ergebnisse dieser Kalibrierungsmessung von den zu erwartenden Werten des Referenzringes ist ein Austausch des Messkopfes gegen einen neuen Messkopf vorgesehen. Auf diese Weise kann die Prozesssicherheit verbessert werden, da eventuelle Verschlechterungen des Messsystems frühzeitig erkannt und Schlechtteile aufgrund falscher Messungen vermieden werden können.

Die Referenzeinrichtung kann bei anderen Ausführungsformen auch neben dem zu messenden Werkstück angeordnet sein, so dass die Messspindel zur Kalibrierung zwischen dem zu messenden Werkstück und der Referenzeinrichtung in seitlicher Richtung verfahren werden muss.

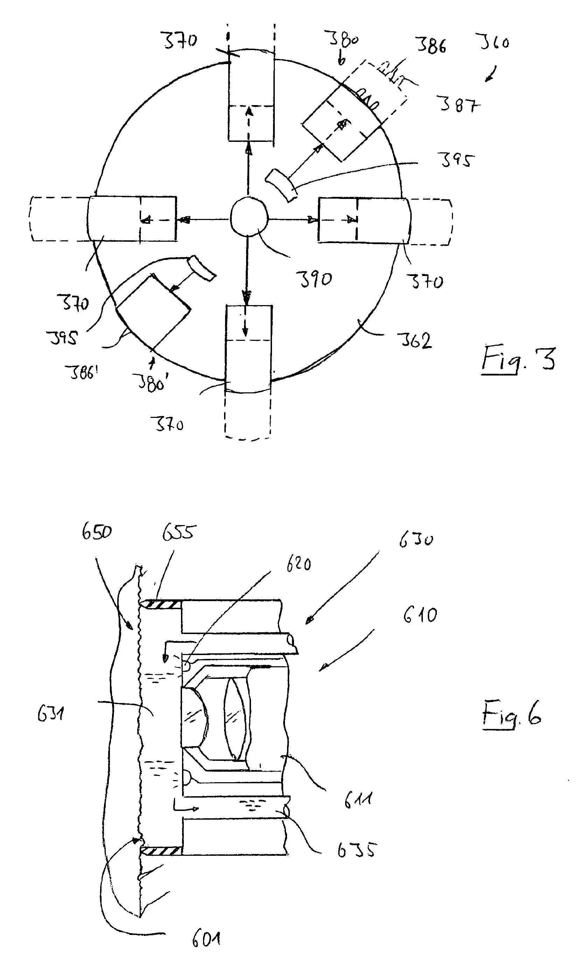

Das Prinzip des Messsystems ist für Bohrungen unterschiedlicher Durchmesser geeignet. Zu dem Messsystem können beispielsweise mehrere unterschiedlich dimensionierte Messköpfe gehören, die jeweils einen abgegrenzten Durchmesserbereich, beispielsweise in der Größenordnung von bis zu zehn Millimetern Durchmesservariationen, abdecken. Anhand Fig. 3 wird eine Ausführungsform eines Messkopfes 360 erläutert, der eine Messung von Bohrungen mit stark unterschiedlichen Durchmessern ermöglicht und beispielsweise einen Durchmesserbereich mit bis zu 10 % oder 20 % Durchmesservariation abdeckt. In dem Messkopfkörper 362 sind, ähnlich wie bei der in Fig. 2 gezeigten Ausführungsform, vier um jeweils 90° winkelversetzt angeordnete Abstützorgane 370 vorgesehen, die radial verschiebbar in dem Werkzeugkörper geführt sind. Die Radialpositionen der Abstützorgane und damit auch der Wirkdurchmesser der Abstützeinrichtung wird mit Hilfe eines Abstützeinrichtungs-Zustellsystems 390 verstellt, dessen Aufbau mit Zustellstange und Zustellkonus im Wesentlichen dem anhand Fig. 2 erläuterten Aufbau entsprechen kann. Der Messkopf trägt zwei diametral gegenüberliegende Messsonden 380, 380', die für eine Rauheitsmessung mittels Tastschnittverfahren konfiguriert sind und dementsprechend jeweils eine Tastspitze 386, 386' haben. Während es sich bei dem Messsensor der Sonde 380' um einen kufenlosen Taster handelt, hat die Messsonde 380 ein Tastsystem mit Kufen 387, die für die bewegliche Tastspitze 386 eine durch die Spitzen des Rauheitsprofils definierte Referenzfläche abfahren, um auf diese Weise eine Differenzmessung zu ermöglichen. Ein Messkopf kann somit nach unterschiedlichem Prinzipien arbeitende Messsensoren enthalten.

Die Messsonden 380, 380' sind innerhalb des Messkopfkörpers radial beweglich geführt, so dass ihre Radialposition gegenüber der Zentralachse des Messkopfes über einen weiten Bereich von mindestens 2 mm, vorzugsweise 5 bis 20 mm eingestellt werden kann. Zur Einstellung der Radialposition der Messsonden ist ein vom Abstützeinrichtungs-Zustellsystem 390 gesondertes Messsonden-Zustellsystem 395 vorgesehen. Dieses kann beispielsweise einen innerhalb des Messkopfes angeordneten elektromotorischen Antrieb umfassen. Der Messkopf kann auch nach Art eines Honwerkzeuges mit Doppel-Aufweitung ausgestaltet sein, so dass für die radiale Verstellung der Messsonden ein weiteres z.B. mit einer Zustellstange betätigbares Zustellsystem vorgesehen sein kann. Im Übrigen kann der Aufbau dieses Messkopfes im Wesentlichen dem Aufbau der Fig. 2 gezeigten Ausführungsform entsprechen. Auf die dortige Beschreibung wird daher verwiesen.

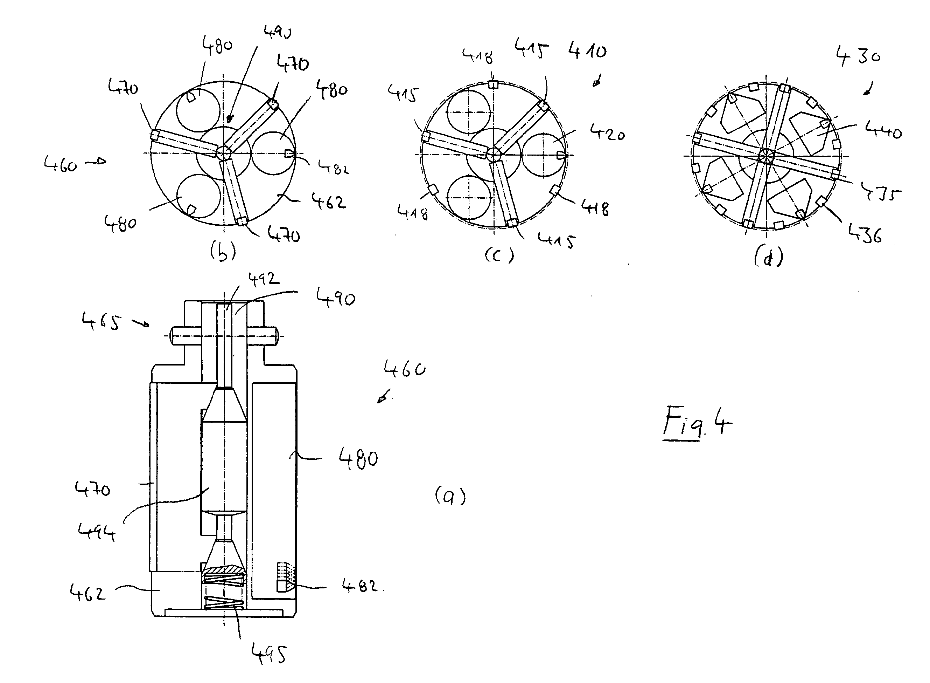

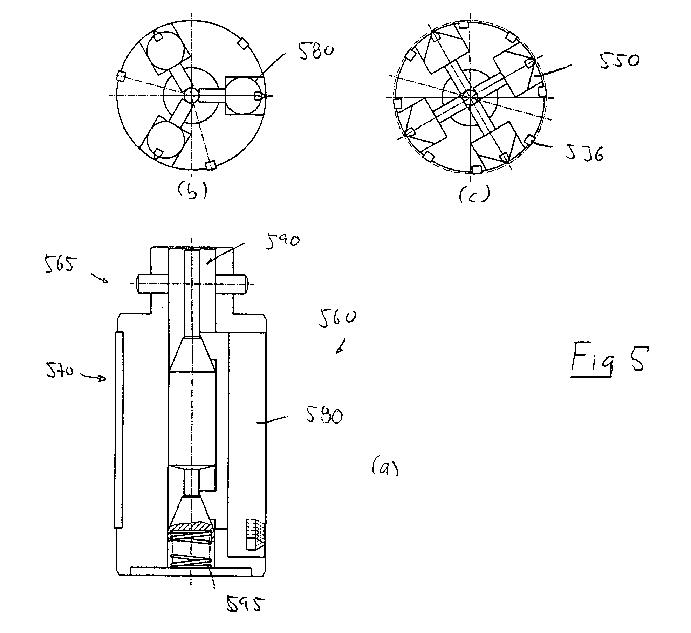

Die Fig. 4 und 5 zeigen andere Ausführungsformen von Messköpfen für erfindungsgemäße Messsysteme. Der Messkopf 460 in Fig. 4 (a) ist nach Art eines einfach aufweitbaren Honwerkzeuges gestaltet und hat einen im Wesentlichen kreiszylindrischen Messkopfkörper 462, an dessen oberen Ende eine Bajonett-Kupplungsstruktur 465 zum Ankoppeln des Messwerkzeuges an eine nach Art einer Honspindel ausgestaltete Messspindel des Messsystems vorgesehen ist. Wie in der Querschnittdarstellung von Fig. 4 (b) erkennbar, hat der Messkopf drei um jeweils 120° zur Zentralachse des Messkopfes umfangsversetzte Messsonden 480, die jeweils einen parallel zur Axialrichtung verfahrbaren Messsensor mit einer Tastspitze 482 haben, um gleichzeitig an drei jeweils 120° umfangsversetzten Messbereichen die Innenfläche einer Bohrung abzutasten. Die Abstützeinrichtung hat drei um jeweils 120° umfangsversetzte Abstützleisten 470, die durch ein gemeinsames Zustellsystem 490 in Radialrichtung zustellbar bzw. nach innen zurückziehbar sind. Das Zustellsystem 490 hat einen innerhalb des Messkörpers axial verschiebbaren Doppelkonus 494 mit zwei axial versetzten Konusflächen, die mit entsprechenden, nach innen gerichteten Schrägflächen von Tragleisten der Abstützorgane 470 zusammenwirken, um eine Parallelverschiebung der Abstützorgane senkrecht zur Messkopfachse zu gewährleisten.

Durch eine am unteren Ende der Zustellstange vorgesehene Schraubenfeder 495 ist das Zustellsystem in eine Abstützkonfiguration mit nach außen herausgeschobenen Abstützorganen elastisch vorgespannt. Die mit Hilfe geeigneter Rückholfedern nach radial innen vorgespannten Abstützorgane werden bei dieser Konstruktion dadurch zurückgezogen, dass die im Inneren der Messspindel verlaufende Zustellstange 492 in Richtung Messkopf 460 gedrückt wird. Bei Entlastung der Zustellstange werden die Abstützorgane mit Hilfe der Schraubenfeder 495 nach außen verschoben und mit einer definierten Vorspannkraft an die Innenfläche der zu messenden Bohrung angedrückt, bevor die Messung beginnt. Da zur Aufrechterhaltung dieser Fixierungsposition keine von außerhalb des Messkopfs eingeleitete Fremdkraft einer Zustellstange nötig ist, kann diese während der Messung von dem messkopfseitigen Teil entkoppelt werden, so dass über das Zustellsystem keine Vibrationen in den Messkopf eingeleitet werden. Der Messkopf ist somit innerhalb der zu messenden Bohrung selbsthaltend fixiert, wodurch die Messgenauigkeit verbessert und die Empfindlichkeit gegen Erschütterungen vermindert wird.

Der Messkopf 410 in Fig. 4 (c) hat ebenfalls drei gleichmäßig um den Umfang verteilte, radial verstellbare Abstützleisten 415. Zusätzlich sind in Umfangsrichtung dazwischen liegend jeweils drei fest angebrachte Führungsleisten 418 vorgesehen. Eine einzelne Messsonde 420 ist für eine Rauheitsmessung vorgesehen und hat hierzu eine vertikal verfahrbare Tastspitze.

Der Messkopf 430 in Fig. 4 (d) hat eine Abstützeinrichtung mit vier jeweils 90° Winkel versetzt angeordneten, radial verfahrbaren Abstützleisten 435 sowie insgesamt acht fest am Messkopfkörper angebrachte Führungsleisten 436, die beispielsweise aus Kunststoff bestehen können und das schonende Einführen des Messkopfes in die zu messenden Bohrung erleichtern. Es sind vier symmetrisch um den Umfang verteilte Messsonden 440 vorgesehen.

Der Messkopf 560 in Fig. 5 (a) und (b) ähnelt hinsichtlich der Kupplungsstruktur 565 und dem Zustellsystem 590 dem Messkopf 460. Im Gegensatz zur dieser Ausführungsform wirkt jedoch das Zustellsystem nicht auf die fest und nicht radial verschiebbaren Abstützorgane 570, sondern auf die mit Hilfe des Messsonden-Zustellsystems 590 radial verstellbaren Messsonden 580, die mit Hilfe des Zustellsystems senkrecht zur Zentralachse des Messkopfes verfahrbar sind und als Abstützorgane dienen. Durch Zustellung der Zustellstange in Richtung Messkopf gegen die Kraft der Schraubenfeder 595 werden die Messsonden 580 nach innen zurückgezogen, so dass der Messkopf seinen Minimaldurchmesser erreicht, der ein problemloses Einführen des Messkopfes in die Bohrung oder eine entsprechende Herausnahme ermöglicht. Zur Messung wird der Messkopf mit zurückgezogenen Messsonden in die Bohrung eingeführt, danach wird das Zustellsystem entlastet, so dass durch die sich entlastende Schraubenfeder 595 die drei Messsonden 580 nach radial außen in Anlagekontakt mit der zu messenden Innenfläche gebracht werden und den Messkopf dadurch gemeinsam mit den Abstützleisten 570 in der Bohrung fixieren. Der Messkopf ist damit ohne das Aufbringen äußerer Kräfte fest in der Bohrung fixiert, so dass die Fixierung des Messkopfes in der Bohrung ausschließlich durch die Konstruktion des Messkopfes selbst (mit Schraubenfeder) möglich ist. Lediglich zur Aufhebung der Fixierung ist von außen eingeleitete Fremdenergie nötig. Da der Messkopf von allein in der Bohrung hält, kann die Stange, mit der die Messeinheit 565 an der Spindel befestigt ist, zur besseren Entkopplung zwischen Maschine und Messsensor gelöst werden. Danach beginnt die Messung durch Verschiebung der Tastspitzen innerhalb der Messsonden.

Die Ausführungsform in Fig. 5 (c) hat eine vierzählige Radialsymmetrie mit vier um jeweils 90° umfangsversetzten, radial zustellbaren Messsonden 550. Als Einführhilfe sind am Umfang des Messkopfes acht Kunststoff-Führungsleisten 536 angebracht, die bei zurückgezogenen Messsonden einen direkten metallischen Kontakt zwischen dem Messkopf und der ihn umgebenden Bohrungsinnenwand verhindern.

Fig. 6 zeigt einen schematischen Ausschnitt einer Messsonde mit einem optischen Messsensor 610, der dafür eingerichtet ist, einen flächig ausgedehnten, zweidimensionalen Messbereich an der Innenfläche 601 einer zylindrischen Bohrung zu erfassen. Der fest am Sondenkörper angebrachte Messsensor 610 umfasst ein Mikroskopobjektiv 611, das zur Messung in einem geringen Abstand zur Innenfläche 601 der Bohrung verfahren wird. Der optische Messsensor umfasst einen CCD-Chip oder dergleichen zur Umwandlung des von dem Mikroskopobjektiv 611 erfassten Bildes in elektrische Signale, die der Auswerteeinheit des Messsystems zugeführt werden. Zur Messung wird der Messbereich mit Hilfe von LED-Leuchten 620 ausgeleuchtet. Je nach dem optischen Messprinzip können auch andere Lichtquellen, beispielsweise Halbleiterlaser verwendet werden. Als Messprinzipien optischer Messsensoren kommen neben der einfachen Bilderfassung auch die Streifenprojektion, interferometrische Meßmethoden oder die konfokale Mikroskopie in Betracht, um auch eine Tiefeninformation über die Topographie der zu messenden Oberfläche zu erhalten.

Dem Messsensor ist eine Reinigungseinrichtung 630 zugeordnet, die dafür ausgelegt ist, den Zwischenraum zwischen der Innenfläche 601 und der Lichteintrittseite des Mikroskopobjektivs 611 mit Hilfe einer für die Messstrahlung (z.B. sichtbares Licht oder Ultraviolettlicht) transparenten Flüssigkeit 631 zu spülen und dabei die Oberfläche von Bearbeitungsrückständen zu befreien. Hierzu wird im Beispielsfall ein gut gereinigtes transparentes Honöl verwendet, das erfindungsgemäß gleichzeitig auch als Immersionsflüssigkeit dient, um das Auflösungsvermögen und/oder die Schärfentiefe der optischen Messung zu verbessern. Da eine Reinigung der Oberfläche jeweils nur in dem gewünschten Messbereich 650 erforderlich ist, sind im Bereich des Messkopfes elastisch verformbare Dichtlippen 655 vorgesehen, die dem Messbereich seitlich umschließen und damit einen relativ kleinvolumigen Raum begrenzen, der für die Messung gespült und mit Immersionsmedium gefüllt wird. Fluidkanäle 635 zur Zufuhr und Abfuhr der transparenten Flüssigkeit sind an einen Vorratsbehälter und an ein Pumpsystem angeschlossen. Wie erwähnt, ist es auch möglich, gut gereinigtes Honöl als Reinigungsflüssigkeit und Immersionsflüssigkeit zu nutzen. Hierzu kann ein Reinigungskreislauf vorgesehen sein, um einen Teil des bei der Bearbeitung verwendeten Honöls aus dem Schmiermittelkreislauf abzuzweigen und mit Hilfe geeigneter Filter zu reinigen.

Der optische Messsensor kann zusätzlich zu einem taktilen Messsensor vorgesehen sein, um andere Oberflächencharakteristika zu erfassen, beispielsweise den Verlauf von Bearbeitungsspuren, Honwinkel, Riefenbreiten etc.

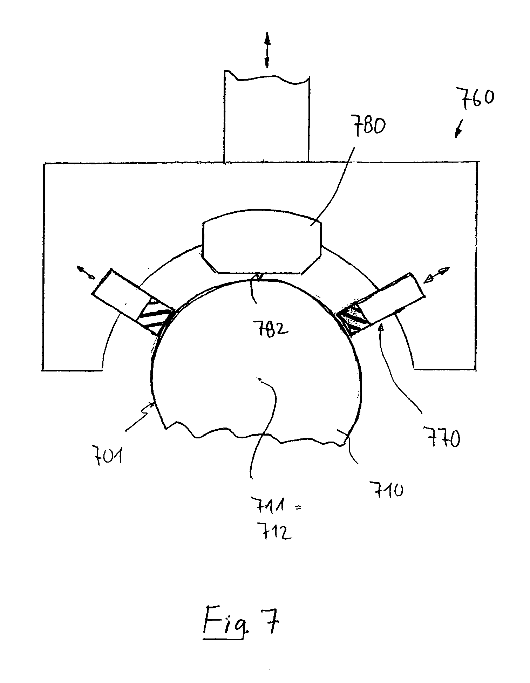

Anhand von Figur 7 wird nun eine Ausführungsform eines Messsystems erläutert, das für die Messung von zylindrisch gekrümmten konvexen Werkstückaußenflächen ausgelegt ist. Das Messsystem kann beispielsweise in eine Bandfinish-Maschine integriert sein, mit der zylindrische Wergstückabschnitte eines Werkstückes, beispielsweise Hauptlagerflächen und Hublagerflächen von Kurbelwellen, bearbeitet werden. Ein im Wesentlichen zylindrischer Werkstückabschnitt 710 mit einer um die Zentralachse 711 des Werkstückabschnitts verlaufenden, zylindrisch gekrümmten Werkstückaußenfläche 701 ist im Querschnitt gezeigt.

Das Messsystem hat einen Messkopf 760, der mit Hilfe eines hydraulischen oder elektromechanischen Zustellsystems in Radialrichtung des Werkstückabschnittes zugestellt werden kann, um den Messkopf für die Messung in eine Messposition nahe der zu messenden Werkstückaußenfläche zu verschieben. Der Messkopf trägt eine fest integrierte Messsonde 780 mit einer linear parallel zur Achse 712 des Messkopfes verschiebbaren Tastspitze 782 eines nicht-erfindungsgemäßen taktilen Messsensors. Die Achse 712 ist die außerhalb des Messkopfes 760 liegende Messkopfachse, die zur Messung einer zylindrischen Außenfläche koaxial mit der entsprechenden Werkstückachse 711 auszurichten ist. Alternativ oder zusätzlich kann der Messkopf auch mindestens einen optischen Messsensor tragen, wie er beispielsweise in Zusammenhang mit Fig. 6 erläutert wurde. Sämtliche im Zusammenhang mit der Messung von Bohrungsinnenflächen erläuterten Typen von Messsensoren können auch bei der Messung von konvex gekrümmten Werkstückaußenflächen verwendet werden. Der Messkopf ist an seiner dem Werkstück zugewandten Seite konkav zylindrisch gestaltet. Beidseitig des Messsensors 780 sind radial zur Achse 712 zustellbare Abstützorgane 770 angebracht, die insbesondere als axial langgestreckte, parallel zur Achse 712 ausgerichtete Abstützleisten gestaltet sein können, wie sie im Zusammenhang mit den Messköpfen für die Bohrungsinnenflächenmessung erläutert wurden. Durch radiale Verschiebung der Abstützorgane 770 lässt sich der Messkopf 760 stufenlos auf Werkstückabschnitte unterschiedlicher Durchmesser einstellen.

Zur Messung eines Werkstückabschnitts bekannten Durchmessers werden zunächst die Abstützorgane 770 bei zurückgezogenem Messkopf 760 in eine radiale Position verfahren, die bei am Werkstück abgestützten Messkopf eine großflächige Anlage der Abstützorgane an der Werkstückoberfläche sichert. Dann wird Messkopf mit Hilfe eines elektromechanischen, pneumatischen oder hydraulischen Antriebs in Richtung auf das Werkstück verfahren, bis die Abstützorgane 770 auf der Werkstückaußenfläche aufsetzen, wobei über eine Kraftsteuerung die Anpresskraft auf einen geeigneten Wert festgelegt ist. Nachdem der Messkopf auf diese Weise am Werkstück fixiert ist, wird der Messsensor in seine Messstellung bewegt, bei der die Tastspitze 782 auf der Werkstückaußenfläche aufsitzt. Danach wird in bereits beschriebener Weise die Rauheitsmessung durchgeführt. Bei anderen Ausführungsformen ist die Messsonde relativ zum Messkopfkörper beweglich angebracht und mit Hilfe eines Sondenantriebes in Richtung auf die zu messende Oberfläche verfahrbar, um einen geeigneten Abstand zwischen Messsonde und Oberfläche einzustellen, wobei die Einstellung der richtigen Radialposition vor, während oder nach der Fixierung des Messkopfes am Werkstück vorgenommen werden kann.

Bei einer nicht bildlich dargestellten Ausführungsform eines Messkopfes zur Messung von konvex gekrümmten Werkstückaußenflächen sind die Abstützorgane fest am Messkopfkörper angebracht, also nicht separat zustellbar. Hierdurch sind mechanisch besonders stabile Systeme möglich. Bei einer solchen Ausführungsform wird der ganze Messkopf mit den integrierten, starren Abstützorganen auf eine Welle oder ein anderes zu messendes Werkstück zugestellt. In diesem Fall kann die Positionierung des Messkopfes relativ zum Werkstück und die Fixierung am Werkstück über eine einzige steuerbare Bewegungsachse, nämlich die Bewegungsachse des Messkopfes, gesteuert werden.

Bei den bisher beschriebenen Ausführungsformen wird als Immersionsflüssigkeit der Kühlschmierstoff verwendet, der in der Honmaschine für die Bearbeitung umläuft. Diese kann vor Einleitung zwischen den optischen Messsensor und die Werkstückoberfläche gereinigt werden. Bei anderen Ausführungsformen wird von einem separaten Tank eine als Immersionsflüssigkeit geeignete Flüssigkeit zugeführt, die vorzugsweise mit dem Kühlschmierstoff kompatibel ist. Diese Flüssigkeit kann neuer, originaler (noch unbenutzter) Kühlschmierstoff oder auch nur ein Grundöl ohne oder mit wenigen Additiven sein. In diesem Fall kann dann z.B. bei jeder Messung eine geringe Menge der neuen Flüssigkeit in die Messkammer, d.h. in den Zwischenraum zwischen Messsensor und Werkstückoberfläche, zugeführt werden. Nach der Messung kann die Flüssigkeit in das Maschinenbett fließen und damit in die große Kühlmittelanlage, in der der zur Bearbeitung verwendete Kühlschmierstoff umläuft. Hierzu kann z.B. der obere Fluidkanal 635 in Fig. 6 über ein Dosierventil an den vom Kühlschmierstoffkreislauf separaten Immersionsflüssigkeits-Tank angeschlossen sein, während der untere Fluidkanal in den Kühlschmierstoffkreislauf mündet. Bei dieser Vorgehensweise kann die optische Qualität der Immersionsflüssigkeit ohne spezielle Maßnahmen bezüglich der Filterung des Kühlschmierstoffes abgesichert werden. Der zugeführte zusätzliche Kühlschmierstoff kann zugleich dazu genutzt werden, den normalen Austrag von Kühlschmierstoff mit den benetzten Teilen nach der Bearbeitung ganz oder teilweise zu kompensieren.

Die Erfindung wurde am Beispiel von Messsystemen für die Rauheitsmessung und/oder bildliche Erfassung der Oberflächenstruktur von gehonten Innenflächen zylindrischer Bohrungen oder mit Hilfe von bandförmigen Feinbearbeitungswerkzeugen oder auf andere Weise feinbearbeiteten zylindrischen Werkstückoberflächen erläutert. Sie ist jedoch nicht auf diese Anwendung und/oder die gezeigten Messsensoren beschränkt. Beispielsweise können Messsensoren unterschiedlicher Messprinzipien kombiniert sein. So kann z.B. zusätzlich zu mindestens einem nicht-erfindungsgemäßen taktilen Sensor mindestens ein erfindungsgemäßer berührungslos arbeitender Messsensor vorhanden sein, beispielsweise ein optischer Sensor zur Erfassung der Oberflächenstruktur, um beispielsweise anhand geeigneter Schnittbilder Rückschlüsse auf Honwinkel, Riefenbreiten, werkstoffspezifische Größen oder dergleichen zu erlauben. Bei geeigneter Auslegung eines optischen Messsensors z.B. zur Streifenprojektion oder dergleichen, kann ein optischer, verschleißfreier Messsensor oft vollwertig zur Messung der Rauheit genutzt werden. Daher kann gegebenenfalls auf einen taktilen Messsensor verzichtet werden, auch wenn Rauheitskenngrößen zu ermitteln sind.

In den Figuren 1 bis 5 und 7 sind zahlreiche Ausgestaltungen von Meßsystemen und mit Messsystemen ausgestatteten Bearbeitungsmaschinen am Beispiel der Verwendung eines nicht-erfindungsgemäßen taktilen Messsensors gezeigt.

Die Erfindung umfasst aber einen optischen Sensor.

Die zu messenden Bauteile und Bohrungen sind nicht auf die Ausführungsbeispiele beschränkt. Beispielsweise können Pleuelbohrungen, Bohrungen in Zahnrädern, Kompressorlaufbahnen und/oder Zylinderbuchsen größerer Dieselmotoren oder anderer Brennkraftmaschinen ebenfalls mit Hilfe erfindungsgemäßer Messsysteme gemessen werden. Mit Hilfe eines für die Messung von konvex gekrümmten Außenflächen eingerichteten Messsystems können beispielsweise weitgehend zylindrische Lagerflächen an Kurbelwellen, Nockenwellen oder anderen Wellen sowie andere zylindrische Werkstücke, beispielsweise feinbearbeitete Kolbenstangen oder dergleichen gemessen werden.

## Patentansprüche

1. Messverfahren zum Messen einer Werkstückoberfläche an einem Werkstück mit Hilfe mindestens einer Messsonde, die einen Sondenkörper und mindestens einen an dem Sondenkörper angebrachten Messsensor aufweist, insbesondere zur Bestimmung der Oberflächenstruktur von zylindrisch gekrümmten Innenflächen oder Außenflächen,
worin mindestens ein optischer Messsensor verwendet wird und ein Zwischenraum zwischen dem Messsensor und der Werkstückoberfläche in einem Messbereich mit einer für die Messstrahlung transparenten Flüssigkeit gefüllt wird, **dadurch gekennzeichnet, dass** die Messung in unmittelbarer Fertigungsnähe unmittelbar im Anschluss an einen letzten Bearbeitungsschritt am fertigen Werkstück oder in einer Zwischenstufe der Bearbeitung durchgeführt wird, dass bei der Bearbeitung eine Bearbeitungsflüssigkeit verwendet wird und dass die bei der Bearbeitung der Werkstückoberfläche als Bearbeitungsflüssigkeit verwendete Flüssigkeit als die genannte, für die Messstrahlung im Wesentlichen transparente Flüssigkeit verwendet wird, so dass die Bearbeitungsflüssigkeit als Immersionsflüssigkeit für das optische Messsystem dient.

2. Messverfahren nach Anspruch 1, wobei die Flüssigkeit vor der Durchführung der Messung gereinigt wird.

3. Messverfahren nach Anspruch 1 oder 2, worin der Messbereich vor und/oder während der Messung mit Hilfe einer Reinigungseinrichtung gereinigt wird, wobei vorzugsweise die Reinigung ein Spülen der Werkstückoberfläche mit einer Flüssigkeit umfasst, und/oder wobei zunächst der Messbereich durch Freiblasen der Werkstückoberfläche gereinigt und danach die Flüssigkeit zwischen den optischen Messsensor und die Werkstückoberfläche geleitet wird.

4. Messverfahren nach einem der vorhergehenden Ansprüche, worin durch den optischen Messsensor ein flächig ausgedehnter, zweidimensionaler Messbereich erfasst wird, und/oder worin der von dem optischen Messsensor erfasste Messbereich mit Hilfe mindestens einer dem Messsensor zugeordneten Lichtquelle während der Messung beleuchtet wird, und/oder worin mit Hilfe des optischen Messsensors eine Bilderfassung, eine Streifenprojektion, ein interferometrisches Messverfahren und/oder ein Verfahren der konfokalen Mikroskopie durchgeführt wird.

5. Messverfahren nach einem der vorhergehenden Ansprüche, **gekennzeichnet durch** eine Positionierung der Messsonde relativ zu dem Werkstück und eine Fixierung des Sondenkörpers am Werkstück in einer Messposition **durch** Abstützen des Sondenkörpers an der Werkstückoberfläche mit Hilfe einer Abstützeinrichtung, die mindestens ein Abstützorgan aufweist, wobei vorzugsweise zum Messen der Innenfläche einer Bohrung in einem Werkstück die, vorzugsweise antriebsgesteuerte, Positionierung der Messsonde eine, vorzugsweise antriebsgesteuerte, Einführung der Messsonde in die Bohrung umfasst und die, vorzugsweise antriebsgesteuerte, Fixierung des Sondenkörpers an der Innenfläche der Bohrung mit Hilfe einer Abstützeinrichtung vorgenommen wird, die mindestens ein in Richtung auf die Innenfläche zustellbares Abstützorgan aufweist, und/oder worin zur Messung der Innenfläche einer Bohrung ein Messkopf verwendet wird, der einen Satz von mehreren um den Umfang des Messkopfes verteilten Abstützorganen zur Abstützung des Messkopfes an der Innenfläche der Bohrung umfasst, wobei mindestens eines der Abstützorgane in Richtung auf die Innenfläche der Bohrung zustellbar ist, wobei vorzugsweise die Abstützung innerhalb eines in Axialrichtung des zu messenden Werkstückabschnittes ausgedehnten Abstützbereiches erfolgt und die Messung innerhalb eines Messbereichs durchgeführt wird, der mindestens teilweise mit dem Abstützbereich überlappt, wobei die Messung vorzugsweise innerhalb eines Messbereichs durchgeführt wird, der vollständig innerhalb des Abstützbereiches liegt.

6. Messverfahren nach Anspruch 5, bei dem der Messsensor während der Messung relativ zu dem fixierten Sondenkörper bewegt wird, wobei vorzugsweise die Werkstückoberfläche bei der Messung entlang einer linearen Messstrecke abgetastet wird.

7. Messverfahren nach einem der vorhergehenden Ansprüche, worin die Messung der Werkstückoberfläche unmittelbar nach einem vorausgegangenen Bearbeitungsschritt der Werkstückoberfläche und/oder unmittelbar vor einem nachfolgenden Bearbeitungsschritt an der Werkstückoberfläche an dem in einer Bearbeitungs-Spannvorrichtung eingespannten Werkstück durchgeführt wird, wobei vorzugsweise vor oder nach der Durchführung einer Messung der Messsensor in den Bereich einer Referenzeinrichtung mit bekannter, definierter Oberflächenstruktur verfahren und der Messsensor durch Messen der Referenzeinrichtung kalibriert wird.

8. Messsystem zum Messen einer Werkstückoberfläche an einem Werkstück, insbesondere zur Bestimmung der Oberflächenstruktur von zylindrisch gekrümmten Innenflächen oder Außenflächen, mit mindestens einer an das Werkstück heranführbaren Messsonde, die einen Sondenkörper und mindestens einen an dem Sondenkörper angebrachten Messsensor aufweist, worin mindestens ein Messsensor ein optischer Messsensor (610) ist und eine Einrichtung zum Füllen eines Zwischenraums zwischen dem Messsensor und der zu messenden Werkstückoberfläche im Messbereich (650) mit einer für Messstrahlung transparenten Flüssigkeit (631) vorgesehen ist, **dadurch gekennzeichnet, dass** das Messsystem zur Durchführung des Messverfahrens nach einem der vorhergehenden Ansprüche konfiguriert ist und dass die Einrichtung zum Füllen des Zwischenraumes dafür eingerichtet ist, den Zwischenraum mit der bei der Bearbeitung der Werkstückoberfläche verwendeten Bearbeitungsflüssigkeit zu füllen, so dass die Bearbeitungsflüssigkeit als Immersionsflüssigkeit für das optische Messsystem dienen kann.

9. Messsystem nach Anspruch 8, wobei dem Messsystem eine Reinigungseinrichtung zur Reinigung einer bei der Bearbeitung der Werkstückoberfläche verwendeten Bearbeitungsflüssigkeit zugeordnet ist und die gereinigte Bearbeitungsflüssigkeit als transparente Flüssigkeit zum Füllen des Zwischenraums verwendet wird.

10. Messsystem nach einem der Ansprüche 8 oder 9, **gekennzeichnet durch** eine Reinigungseinrichtung (630) zur Reinigung des Messbereiches (650) vor und/oder während der Messung, wobei die Reinigungseinrichtung vorzugsweise zum Freiblasen der Werkstückoberfläche und/oder zum Spülen der Werkstückoberfläche mit einer Flüssigkeit eingerichtet ist, wobei die Reinigungseinrichtung vorzugsweise zum Freiblasen der Werkstückoberfläche und zum nachfolgenden Spülen der Werkstückoberfläche mittels einer Flüssigkeit eingerichtet ist.

11. Messsystem nach einem der Ansprüche 8 bis 10, worin der optische Messsensor (610) ein Mikroskopobjektiv (611) aufweist, und/oder worin der optische Messsensor (610) einen optoelektronischen Wandler, insbesondere einen CCD-Chip, zur Umwandlung des von der von dem Mikroskopobjektiv (611) erfassten Bildes in elektrische Signale aufweist, und/oder worin der optische Messsensor zur Durchführung einer einfachen Bilderfassung, einer Streifenprojektion, für ein interferometrisches Meßverfahren und/oder für konfokale Mikroskopie eingerichtet ist, wobei vorzugsweise mindestens eine dem Messsensor zugeordnete Lichtquelle (620) zum Beleuchten des Messbereichs (650) während der Messung vorgesehen ist.

12. Messsystem nach einem der Ansprüche 8 bis 11, **gekennzeichnet durch** eine dem Messsensor zugeordnete Abstützeinrichtung mit mindestens einem mit Hilfe eines Zustellantriebes in Richtung auf die Werkstückoberfläche zustellbaren Abstützorgan zur Fixierung des Sondenkörpers an dem Werkstück in einer Messposition durch Abstützung des Sondenkörpers an der Werkstückoberfläche, wobei die Messsonde vorzugsweise in einen Messkopf integriert ist, der einen Satz von mehreren Abstützorganen aufweist, wobei mindestens eines der Abstützorgane relativ zu einem Messkopfkörper des Messkopfes beweglich gelagert und über ein Zustellsystem betätigbar ist, wobei die Abstützeinrichtung vorzugsweise einen in Axialrichtung des zu messenden Werkstückabschnittes ausgedehnten Abstützbereich definiert und der Messsensor innerhalb eines Messbereichs wirksam ist, der mindestens teilweise mit dem Abstützbereich überlappt, wobei der Messbereich vorzugsweise vollständig innerhalb des Abstützbereiches liegt, und/oder wobei mindestens ein Messsensor in Umfangsrichtung und/oder in Axialrichtung zwischen zwei benachbarten Abstützorganen und/oder zwischen zwei **durch** Abstützorgane definierten Abstützstellen angeordnet ist.

13. Messsystem nach einem der Ansprüche 8 bis 12, worin die Messsonde in einen Messkopf integriert ist und ein Messsensor-Zustellsystem zur Einstellung einer radialen Position des Messsensors relativ zu einer Messkopfachse des Messkopfs vorgesehen ist.

14. Messsystem nach einem der Ansprüche 8 bis 13, bei dem die Messsonde mindestens einen mit Hilfe einen Sensor-Antriebs relativ zum Sondenkörper beweglichen Messsensor aufweist, wobei vorzugsweise mindestens ein Messsensor zur Abtastung der Werkstückoberfläche entlang einer linearen Messstrecke eingerichtet ist.

15. Bearbeitungsmaschine, in die mindestens ein Messsystem nach einem der Ansprüche 8 bis 14 integriert ist.

16. Bearbeitungsmaschine nach Anspruch 15, worin die Bearbeitungsmaschine eine Honmaschine ist und eine Spindel der Honmaschine als Messspindel (155) des Messsystems genutzt wird, und/oder worin eine Auswerteeinrichtung des Messsystems mit einer Steuereinrichtung der Bearbeitungsmaschine signalübertragend verbunden ist und gemeinsam mit dieser eine Regeleinrichtung zur Steuerung der Bearbeitung auf Basis von mit dem Messsystem erhaltenen Messdaten bildet, wobei vorzugsweise die Bearbeitungszeit und/oder der Anpressdruck von Schneidstoffträgern auf Basis von Messwerten des Messsystems steuerbar sind.

## Claims

1. Measuring method for measuring a workpiece surface on a workpiece with the aid of at least one measuring probe, which has a probe body and at least one measuring sensor attached to the probe body, in particular for determining the surface structure of cylindrically curved internal surfaces or external surfaces,
wherein at least one optical measuring sensor is used, and an interspace between the measuring sensor and the workpiece surface in a measuring area is filled with a liquid that is transparent to the measuring radiation, **characterized in that** the measurement is carried out in the immediate production vicinity immediately following a last processing step on the finished workpiece or in an intermediate stage of the processing, **in that** a processing liquid is used during the processing, and **in that** the liquid used as a processing liquid during the processing of the workpiece surface is used as the aforesaid liquid that is substantially transparent to the measuring radiation, so that the processing liquid serves as an immersion liquid for the optical measuring system.

2. Measuring method according to Claim 1, wherein the liquid is cleaned before the measurement is carried out.

3. Measuring method according to Claim 1 or 2, wherein the measuring area is cleaned with the aid of a cleaning device before and/or during the measurement, wherein the cleaning preferably comprises rinsing the workpiece surface with a liquid, and/or wherein firstly the measuring area is cleaned by purging the workpiece surface and, after that, the liquid is led between the optical measuring sensor and the workpiece surface.

4. Measuring method according to one of the preceding claims, wherein a planar, extended two-dimensional measuring area is registered by the optical measuring sensor, and/or wherein the measuring area registered by the optical measuring sensor is illuminated during the measurement with the aid of at least one light source assigned to the measuring sensor, and/or wherein, with the aid of the optical measuring sensor, an acquisition of an image, a strip projection, an interferometric measuring method and/or a method for confocal microscopy is carried out.

5. Measuring method according to one of the preceding claims, **characterized by** positioning the measuring probe relative to the workpiece and fixing the probe body to the workpiece in a measuring position by means of supporting the probe body on the workpiece surface with the aid of a supporting device which has at least one supporting element, wherein, preferably in order to measure the internal surface of a bore in a workpiece, the preferably drive-controlled positioning of the measuring probe comprises a preferably drive-controlled insertion of the measuring probe into the bore, and the preferably drive-controlled fixing of the probe body to the internal surface of the bore is performed with the aid of a supporting device which has at least one supporting element that can be in advanced in the direction of the internal surface, and/or wherein, in order to measure the internal surface of a bore, use is made of a measuring head which comprises a set of multiple supporting elements, distributed around the circumference of the measuring head, for supporting the measuring head on the internal surface of the bore, wherein at least one of the supporting elements can be advanced in the direction of the internal surface of the bore, wherein the supporting action is preferably carried out within a supporting area which is extended in the axial direction of the workpiece section to be measured, and the measurement is carried out within a measuring area which at least partly overlaps the supporting area, wherein the measurement is preferably carried out within a measuring area which lies completely within the supporting area.

6. Measuring method according to Claim 5, wherein, during the measurement, the measuring sensor is moved relative to the fixed probe body, wherein the workpiece surface is preferably sensed along a linear measuring path during the measurement.

7. Measuring method according to one of the preceding claims, wherein the measurement of the workpiece surface is carried out on the workpiece clamped in a processing clamping device immediately after a preceding processing step of the workpiece surface and/or immediately before a following processing step on the workpiece surface, wherein, preferably before or after the performance of a measurement, the measuring sensor is moved into the area of a reference device having a known, defined surface structure, and the measuring sensor is calibrated by measuring the reference device.

8. Measuring system for measuring a workpiece surface on a workpiece, in particular for determining the surface structure of cylindrically curved internal surfaces or external surfaces, having at least one measuring probe that can be brought up to the workpiece and has a probe body and at least one measuring sensor attached to the probe body, wherein at least one measuring sensor is an optical measuring sensor (610), and a device is provided to fill an interspace between the measuring sensor and the workpiece surface to be measured in the measuring area (650) with a liquid (631) that is transparent to measuring radiation, **characterized in that** the measuring system is configured to carry out the measuring method according to one of the preceding claims, and **in that** the device for filling the interspace is set up to fill the interspace with the processing liquid used during the processing of the workpiece surface, so that the processing liquid is able to serve as an immersion liquid for the optical measuring system.

9. Measuring system according to Claim 8, wherein the measuring system is assigned a cleaning device for cleaning a processing liquid used during the processing of the workpiece surface, and the cleaned processing liquid is used as a transparent liquid for filling the interspace.

10. Measuring system according to either of Claims 8 and 9, **characterized by** a cleaning device (630) for cleaning the measuring area (650) before and/or during the measurement, wherein the cleaning device is preferably set up to purge the workpiece surface and/or to rinse the workpiece surface with a liquid, wherein the cleaning device is preferably set up to purge the workpiece surface and then to rinse the workpiece surface by means of a liquid.

11. Measuring system according to one of Claims 8 to 10, wherein the optical measuring sensor (610) has a microscope objective (611), and/or wherein the optical measuring sensor (610) has an optoelectronic converter, in particular a CCD chip, for converting the image acquired by the microscope objective (611) into electrical signals, and/or wherein the optical measuring sensor is set up to carry out a simple image acquisition, a strip projection, for an interferometric measuring method and/or for confocal microscopy, wherein, preferably, at least one light source (620) assigned to the measuring sensor is provided in order to illuminate the measuring area (650) during the measurement.

12. Measuring system according to one of Claims 8 to 11, **characterized by** a supporting device assigned to the measuring sensor and having at least one supporting element, which can be advanced in the direction of the workpiece surface with the aid of a feed drive, for fixing the probe body to the workpiece in a measuring position by means of supporting the probe body on the workpiece surface, wherein the measuring probe is preferably integrated in a measuring head which has a set of multiple supporting elements, wherein at least one of the supporting elements is mounted such that it can be moved relative to a measuring head body of the measuring head and can be actuated via a feed system, wherein the supporting device preferably defines a supporting area that is extended in the axial direction of the workpiece section to be measured, and the measuring sensor is effective within a measuring area which at least partly overlaps the supporting area, wherein the measuring area preferably lies completely within the supporting area, and/or wherein at least one measuring sensor is arranged in the circumferential direction and/or in the axial direction between two adjacent supporting elements and/or between two supporting points defined by supporting elements.

13. Measuring system according to one of Claims 8 to 12, wherein the measuring probe is integrated in a measuring head, and a measuring sensor feed system is provided to set a radial position of the measuring sensor relative to a measuring head axis of the measuring head.

14. Measuring system according to one of Claims 8 to 13, wherein the measuring probe has at least one measuring sensor that can be moved relative to the probe body with the aid of a sensor drive, wherein preferably at least one measuring sensor is set up to scan the workpiece surface along a linear measuring path.

15. Processing machine in which at least one measuring system according to one of Claims 8 to 14 is integrated.

16. Processing machine according to Claim 15, wherein the processing machine is a honing machine, and a spindle of the honing machine is used as a measuring spindle (155) of the measuring system, and/or wherein an evaluation device of the measuring system is connected to a controller of the processing machine so as to transmit signals and, together with said controller, forms a control device for the open-loop control of the processing on the basis of measured data obtained with the measuring system, wherein preferably the processing time and/or the contact pressure of cutting material carriers can be controlled on the basis of measured values from the measuring system.

## Revendications

1. Procédé de mesure de la surface d'une pièce à l'aide d'au moins une sonde de mesure qui présente un corps de sonde et au moins un capteur de mesure placé sur le corps de sonde, en particulier pour déterminer la structure superficielle de surfaces intérieures ou extérieures à courbure cylindrique,
dans lequel au moins un capteur optique de mesure est utilisé et un espace intermédiaire situé dans une zone de mesure entre le capteur de mesure et la surface de la pièce est rempli d'un liquide transparent pour le rayonnement de mesure,
**caractérisé en ce que**
la mesure est réalisée à proximité directe de la fabrication, directement après une dernière étape de traitement, sur la pièce terminée ou dans une étape intermédiaire du traitement,
**en ce qu'**un liquide de traitement est utilisé lors du traitement et
**en ce que** le liquide utilisé comme liquide de traitement lors du traitement de la surface de la pièce est utilisé comme dit liquide essentiellement transparent pour le rayonnement de mesure en utilisant le liquide de traitement comme liquide d'immersion pour le système optique.

2. Procédé de mesure selon la revendication 1, dans lequel le liquide est nettoyé avant l'exécution de la mesure.

3. Procédé de mesure selon les revendications 1 ou 2, dans lequel la zone de mesure est nettoyée à l'aide d'un dispositif de nettoyage avant et/ou pendant la mesure, le nettoyage comportant de préférence un rinçage de la surface de la pièce à l'aide d'un liquide et/ou dans lequel la zone de mesure est d'abord nettoyée par soufflage de la surface de la pièce, le liquide étant ensuite amené entre le capteur optique de mesure et la surface de la pièce.

4. Procédé de mesure selon l'une des revendications précédentes, dans lequel une zone de mesure bidimensionnelle de grande surface est saisie par le capteur optique de mesure, et/ou dans lequel la zone de mesure saisie par le capteur optique de mesure est éclairée pendant la mesure à l'aide d'au moins une source de lumière associée au capteur de mesure et/ou dans lequel une saisie d'image, une projection en ruban, une opération de mesure par interférométrie et/ou une opération de microscopie confocale sont exécutées à l'aide du capteur optique de mesure.

5. Procédé de mesure selon l'une des revendications précédentes, **caractérisé par** un positionnement de la sonde de mesure par rapport à la pièce et une fixation du corps de sonde sur la pièce dans une position de mesure par soutien du corps de sonde sur la surface de la pièce à l'aide d'un dispositif de soutien qui présente au moins un organe de soutien, dans lequel, de préférence pour la mesure de la surface intérieure d'un alésage ménagé dans une pièce, le positionnement de la sonde de mesure, de préférence sous la commande d'un entraînement, comporte l'insertion de la sonde de mesure dans l'alésage, de préférence sous la commande d'un entraînement, et la fixation du corps de sonde, de préférence sous la commande d'un entraînement, sur la surface intérieure de l'alésage à l'aide d'un dispositif de soutien qui présente au moins un organe de soutien qui peut être ajusté en direction de la surface intérieure, et/ou dans lequel, pour la mesure de la surface intérieure d'un alésage, on utilise une tête de mesure qui comporte un jeu constitué de plusieurs organes de soutien répartis à la périphérie de la tête de mesure pour soutenir la tête de mesure sur la surface intérieure de l'alésage, au moins l'un des organes de soutien pouvant être ajusté en direction de la surface intérieure de l'alésage, le soutien s'effectuant de préférence à l'intérieur d'une zone de soutien qui s'étend dans la direction axiale de la partie de la pièce à mesurer et la mesure étant exécutée à l'intérieur d'une zone de mesure qui se superpose au moins en partie à la zone de soutien, la mesure étant de préférence réalisée à l'intérieur d'une zone de mesure située entièrement à l'intérieur de la zone de soutien.

6. Procédé de mesure selon la revendication 5, dans lequel le capteur de mesure est déplacé par rapport au corps de sonde fixé pendant la mesure, la surface de la pièce étant palpée lors de la mesure de préférence le long d'un parcours linéaire de mesure.

7. Procédé de mesure selon l'une des revendications précédentes, dans lequel la mesure de la surface de la pièce est réalisée immédiatement après une étape de traitement précédente de la surface de la pièce et/ou immédiatement avant une étape de traitement suivante sur la surface de la pièce, sur la pièce serrée dans un ensemble de serrage de traitement, le capteur de mesure étant de préférence déplacé avant ou après l'exécution d'une mesure dans la zone d'un dispositif de référence qui présente une structure de surface connue et définie, le capteur de mesure étant étalonné par mesure du dispositif de référence.

8. Système de mesure de la surface d'une pièce, en particulier pour déterminer la structure superficielle de surfaces intérieures ou de surfaces extérieures à courbure cylindrique,
le système présentant au moins une sonde de mesure qui peut être amenée sur la pièce et qui présente un corps de sonde et au moins un capteur de mesure placé sur le corps de sonde,
au moins un capteur de mesure étant un capteur optique de mesure (610),
un dispositif de remplissage d'un espace intermédiaire situé entre le capteur de mesure et la surface de la pièce à mesurer par un liquide (631) transparent pour le rayonnement de mesure étant prévu dans la zone de mesure (650),
**caractérisé en ce que**
le système de mesure est configuré pour exécuter l'opération de mesure selon l'une des revendications précédentes et
**en ce que** le dispositif de remplissage de l'espace intermédiaire est conçu pour remplir l'espace intermédiaire par le liquide de traitement utilisé lors du traitement de la surface de la pièce en utilisant le liquide de traitement comme liquide d'immersion pour le système optique de mesure.

9. Système de mesure selon la revendication 8, dans lequel un dispositif de nettoyage qui nettoie le liquide de traitement utilisé lors du traitement de la surface de la pièce est associé au système de mesure, le liquide de traitement nettoyé étant utilisé comme liquide transparent servant à remplir l'espace intermédiaire.

10. Système de mesure selon l'une des revendications 8 ou 9, **caractérisé par** un dispositif de nettoyage (630) qui nettoie la zone de mesure (650) avant et/ou pendant la mesure, le dispositif de nettoyage étant conçu de préférence pour souffler la surface de la pièce et/ou pour rincer la surface de la pièce par un liquide, le dispositif de nettoyage étant de préférence conçu pour souffler la surface de la pièce et pour ensuite rincer la surface de la pièce au moyen d'un liquide.

11. Système de mesure selon l'une des revendications 8 à 10, dans lequel le capteur optique de mesure (610) présente un objectif (611) de microscope, et/ou dans lequel le capteur optique de mesure (610) comporte un convertisseur opto-électronique, en particulier un chip CCD, qui convertit l'image saisie par l'objectif (611) de microscope en signaux électriques et/ou dans lequel le capteur optique de mesure est conçu pour exécuter une simple saisie d'image, une projection en ruban, une opération de mesure par interférométrie et/ou une microscopie confocale, au moins une source de lumière (620) associée au capteur de mesure étant prévue pour éclairer la zone de mesure (650) pendant la mesure.

12. Système de mesure selon l'une des revendications 8 à 11, **caractérisé par** un dispositif de soutien associé au capteur de mesure et présentant au moins un organe de soutien qui peut être ajusté sur la surface de la pièce à l'aide d'un entraînement d'ajustement, et qui fixe le corps de sonde sur la pièce dans une position de mesure en soutenant le corps de sonde sur la surface de la pièce, la sonde de mesure étant de préférence intégrée dans une tête de mesure qui présente un jeu de plusieurs organes de soutien, au moins l'un des organes de soutien étant monté de manière à pouvoir être déplacé par rapport au corps de la tête de mesure et pouvant être actionné par un système d'ajustement, le dispositif de soutien définissant de préférence une zone de soutien qui s'étend dans la direction axiale de la partie de la pièce de mesure à mesurer, le capteur de mesure étant actif à l'intérieur d'une zone de mesure qui se superpose au moins en partie à la zone de soutien, la zone de mesure étant de préférence située complètement à l'intérieur de la zone de soutien et/ou dans lequel au moins un capteur de mesure est disposé dans la direction périphérique et/ou dans la direction axiale entre deux organes de soutien voisins et/ou entre deux emplacements de soutien définis par des organes de soutien.

13. Système de mesure selon l'une des revendications 8 à 12, dans lequel la sonde de mesure est intégrée dans une tête de mesure et un système d'ajustement de capteur de mesure est prévu pour ajuster la position radiale du capteur de mesure par rapport à l'axe de la tête de mesure.

14. Système de mesure selon l'une des revendications 8 à 13, dans lequel la sonde de mesure présente au moins un capteur de mesure apte à être déplacé par rapport au corps de sonde à l'aide d'un entraînement de capteur, au moins un capteur de mesure étant de préférence conçu pour palper, la surface de la pièce le long d'un parcours linéaire de mesure.

15. Machine de traitement dans laquelle au moins un système de mesure selon l'une des revendications 8 à 14 est intégré.

16. Machine de traitement selon la revendication 15, dans laquelle la machine de traitement est une machine de rodage et une broche de la machine de rodage est utilisée comme broche de mesure (155) du système de mesure et/ou dans laquelle un dispositif d'évaluation du système de mesure est raccordé à un dispositif de commande de la machine de traitement en vue de la transmission de signaux et forme avec ce dernier un dispositif de régulation qui commande le traitement sur la base de données de mesure obtenues du système de mesure, de préférence la durée de traitement et/ou la poussée de supports de matière coupante pouvant être commandée sur la base de valeurs de mesure du système de mesure.
